# EUROPEAN PATENT SPECIFICATION

(11) **EP 4 352 886 B1**
(45) Date of publication and mention of the grant of the patent: **05.08.2026**
(21) Application number: 22738816.2
(22) Date of filing: 09.06.2022
(51) Int. Cl.: H01Q 1/12, H01Q 1/24, H01Q 3/34, H04B 17/29, H04B 7/06, H04B 17/345, H04B 17/391, H04B 7/185

(54) **COMMUNICATION PERFORMANCE MAPPING FOR PHASED ARRAY ANTENNAS**
KOMMUNIKATIONSLEISTUNGSKARTIERUNG FÜR PHASENGESTEUERTE GRUPPENANTENNEN
MAPPAGE DE PERFORMANCE DE COMMUNICATION POUR ANTENNES RÉSEAU À COMMANDE DE PHASE

(30) Priority: 29.06.2021 US 202163216507 P
(43) Date of publication of application: 17.04.2024
(73) Proprietor: VIASAT INC., Carlsbad, California 92009 (US)
(72) Inventor: DANKBERG, Mark D., Carlsbad, California 92009 (US); BUER, Kenneth V., Carlsbad, California 92009 (US)
(74) Representative: Appleyard Lees IP LLP
(86) International application number: PCT/US2022/032880
(87) International publication number: WO 2023/278119

(56) References cited:
- US-A1- 2018 167 102
- US-A1- 2020 195 340
- US-A1- 2020 267 575

## Description

### BACKGROUND

In some wireless communication systems, a terrestrial-based user terminal antenna may be used to provide communication with one or more target devices, such as satellites (e.g., non-geostationary satellites, satellites in a low earth orbit), that may traverse an overhead path. Environments in which user terminal antennas are mounted may vary, and an environment local to a user terminal antenna may include obstructions or other sources of signal attenuation. As a target device moves through different positions relative to the user terminal, obstructions or attenuation sources may degrade or block communications between the user terminal antenna and the target device. US 2020/267575 A1 describes features generally relating to determining dynamic signal quality criteria for an installation of satellite terminals for communications in a satellite communications system. In particular, the signal quality criteria for an installation may be based on an identified position of the satellite terminal to be installed, and in some examples based on the positions and signal characteristics of neighbouring satellite terminals that have already been installed. A signal quality map may be generated for a service beam coverage area, based on predetermined transmission characteristics and/or measured transmissions from a number of satellite terminals served by a communications satellite. The generated signal quality map may then be used to determine a signal quality threshold for the installation of a satellite terminal being installed for communications in a satellite communications system.

### SUMMARY

The described features generally relate to systems and techniques for communication performance mapping for operating phased array antennas, such as those that may be used for communications with or via a satellite or other target device. A phased array antenna may include a set of feed elements that are physically arranged in a feed array assembly, and signals of respective feed elements may be manipulated according to various beamforming techniques to support transmit beams (e.g., directional transmission), receive beams (e.g., directional reception), or both. In some examples, a phased array antenna may be associated with characteristics that are directional in nature, including various characteristics that vary depending on an orientation of signaling relative to a physical positioning or orientation of the array of feed elements (e.g., depending on a relative separation between a beam orientation and a physical boresight of the phased array antenna, depending on a scan angle).

In accordance with examples as disclosed herein, a communication system may be configured to consider directional beam characteristics in the operation of a phased array antenna. In some examples, a communication system may be configured to generate or utilize a communications performance map for evaluating or characterizing a local communication environment relative to directional characteristics of a phased array antenna. For example, boundaries or orientations of a communications performance map may be used for evaluating when a target device is within a range of positions that support communications with the phased array antenna, for evaluating which of a set of target devices may be in a position that is favorable for communications with the phased array antenna, or for evaluating when a terminal should hand off communications via the phased array antenna from one target device to another, among other communications operations. In some examples, directional characteristics of a phased array antenna, or a communications performance map thereof, may be used for evaluating if or when to reposition or reorient the phased array antenna (e.g., to determine an orientation of a boresight of the phased array antenna), such as when the phased array antenna is provided with a generally fixed or immobilized orientation by an installer, or when the phased array antenna leverages a combination of controlled physical actuation and electronic beamforming. By considering directional characteristics of a phased array antenna in the operation of an antenna assembly (e.g., of a user terminal), various aspects of communications may be improved compared to techniques that do not consider directional characteristics of phased array antennas.
In an aspect of the present disclosure, there is provided an apparatus for communications in a satellite communication system according to claim 1. Optional features of the apparatus are provided in dependent claims 2 to 15.

Features of the disclosure are initially described in the context of an example of a satellite communication system and a phased array antenna with reference to FIGs. 1 and 2. Features of the disclosure are described in the context of examples of beamforming networks, antenna characteristics, and communications performance mapping with reference to FIGs. 3A through 6. Examples of systems and methods that relate to communications performance mapping in the context of communications operations and installations are described with references to FIGs. 7 through 11.

### BRIEF DESCRIPTION OF THE DRAWINGS

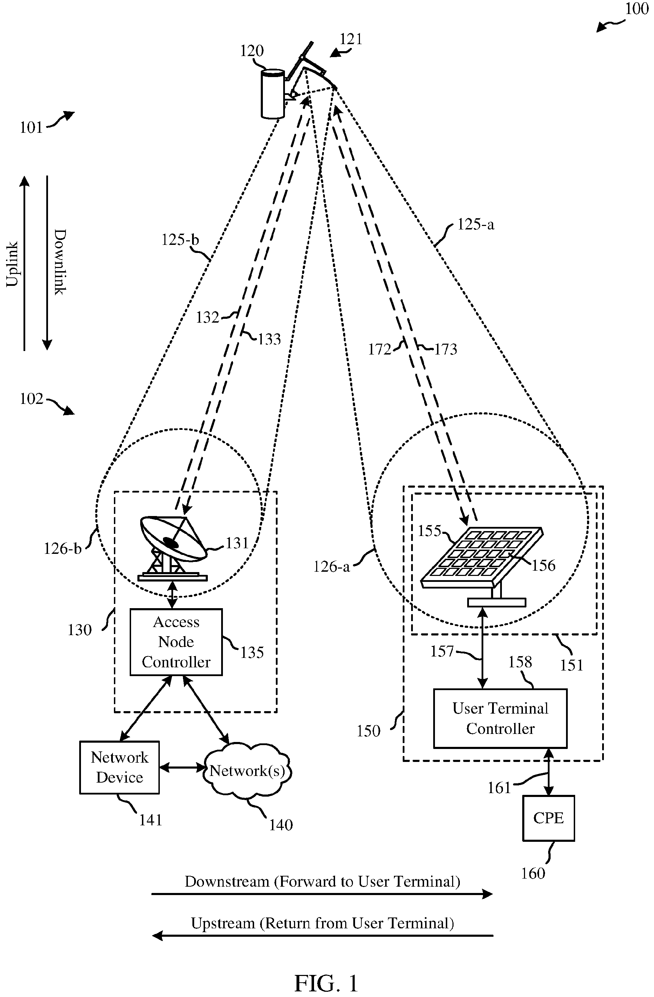

FIG. 1 shows a diagram of a communication system that supports communication performance mapping for phased array antennas in accordance with examples as disclosed herein.

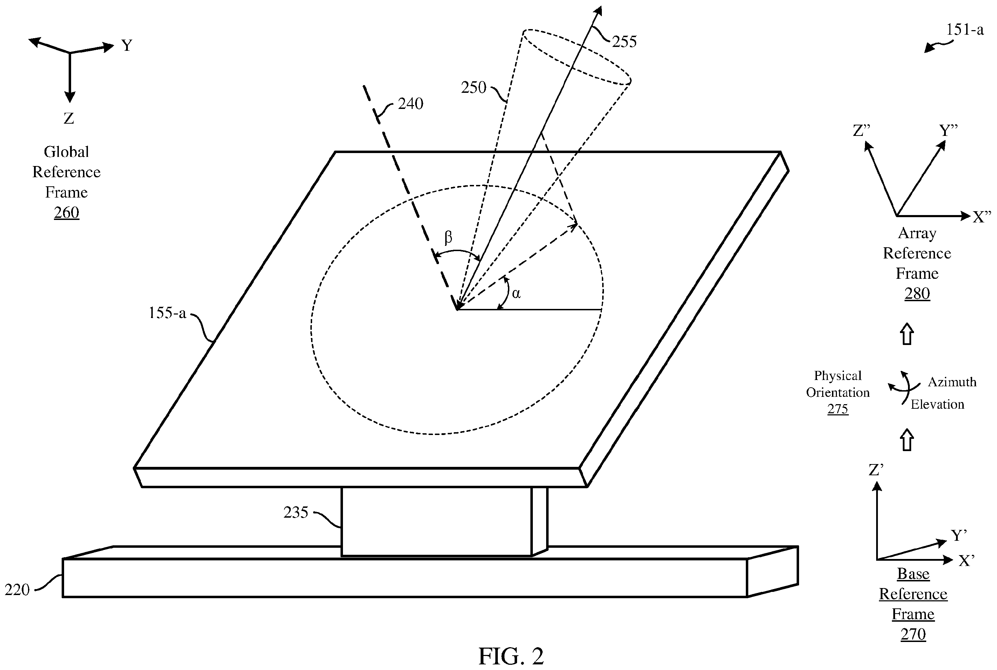

FIG. 2 illustrates an example of an antenna assembly that supports communication performance mapping for phased array antennas in accordance with examples as disclosed herein.

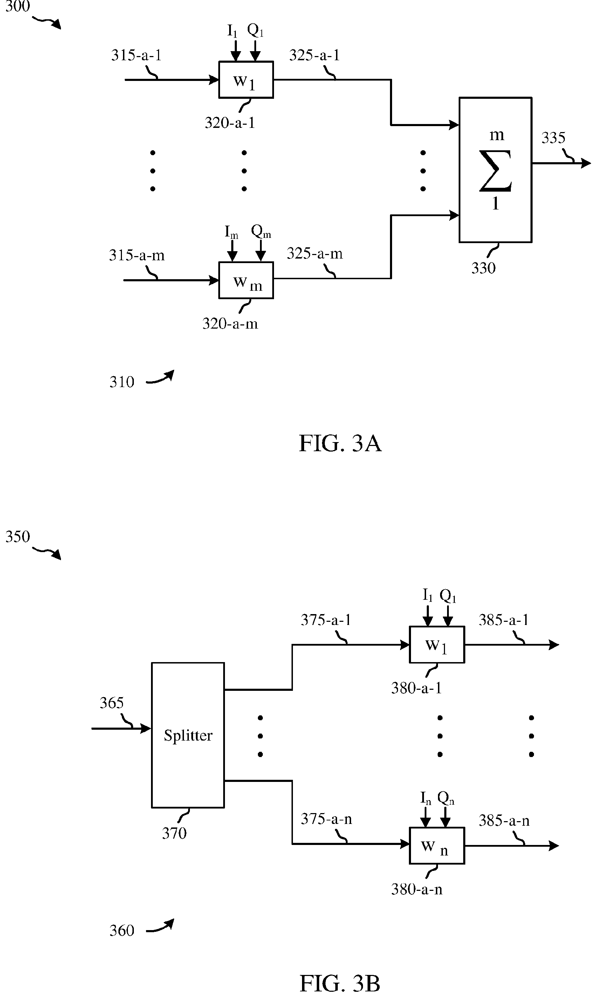

FIGs. 3A and 3B shows block diagrams of a receive beamforming network, and a transmit beamforming network, respectively, that support communication performance mapping for phased array antennas in accordance with examples as disclosed herein.

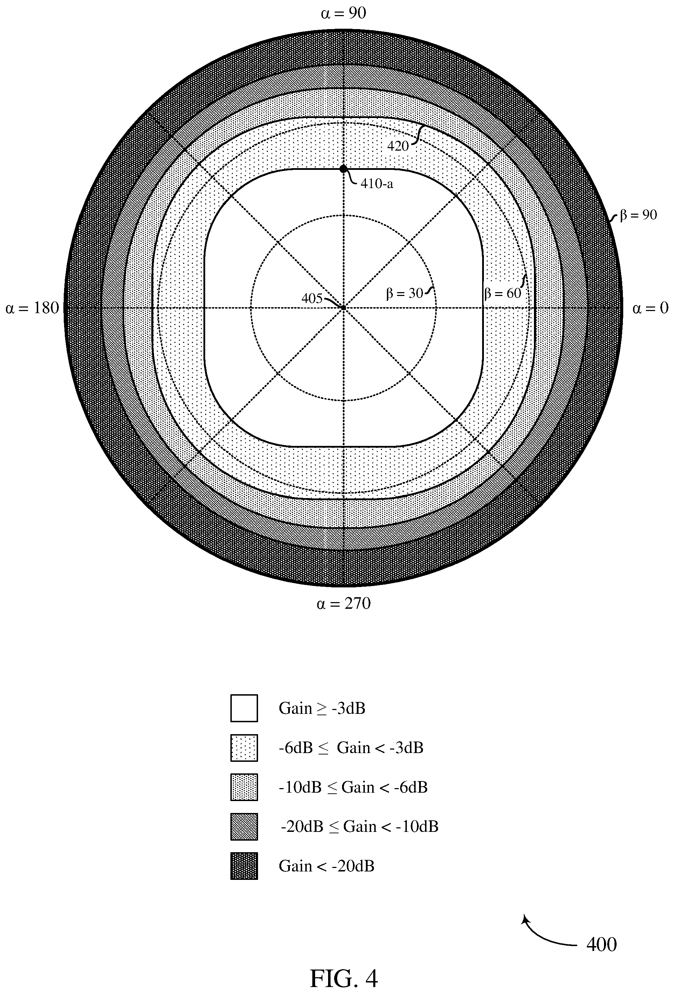

FIG. 4 illustrates an example of an antenna characteristic map that supports communication performance mapping for phased array antennas in accordance with examples as disclosed herein.

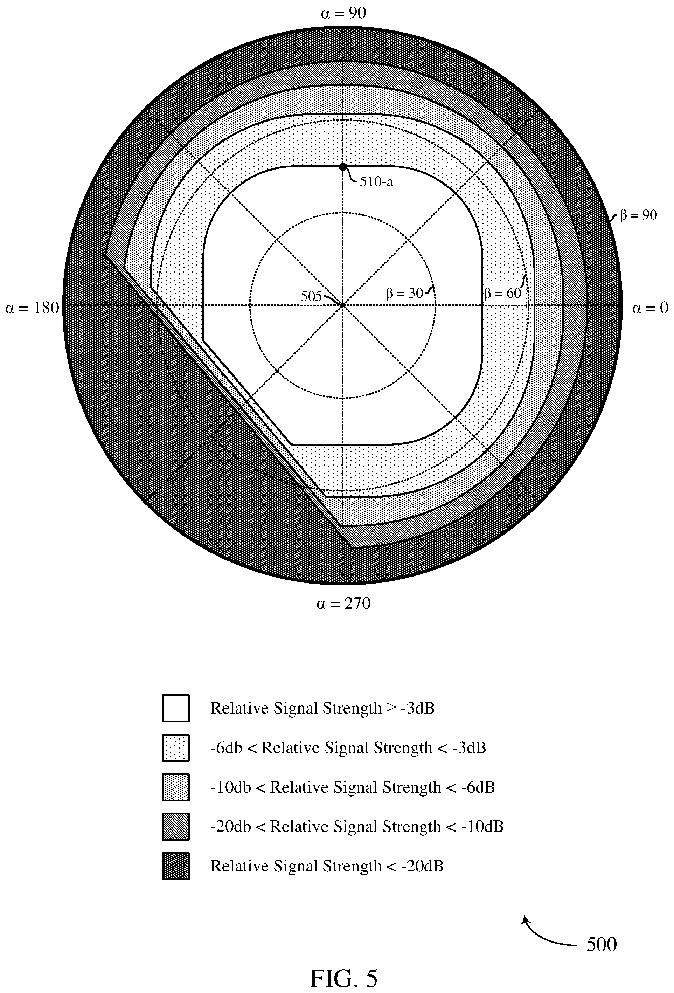

FIG. 5 illustrates a signaling map that supports communication performance mapping for phased array antennas in accordance with examples as disclosed herein.

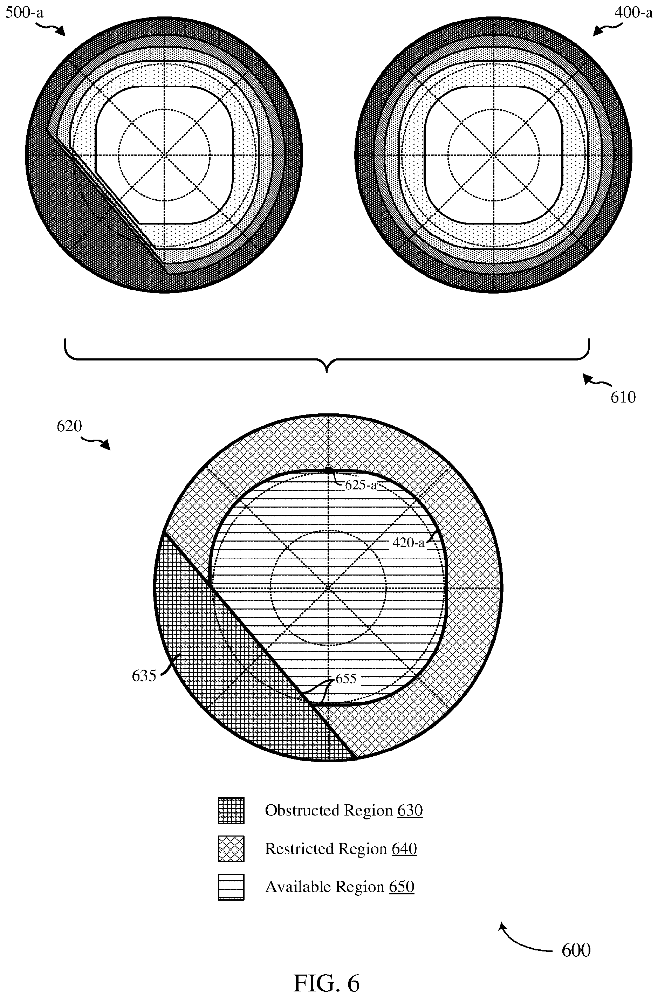

FIG. 6 illustrates an example of generating a communications performance map that supports communication performance mapping for phased array antennas in accordance with examples as disclosed herein.

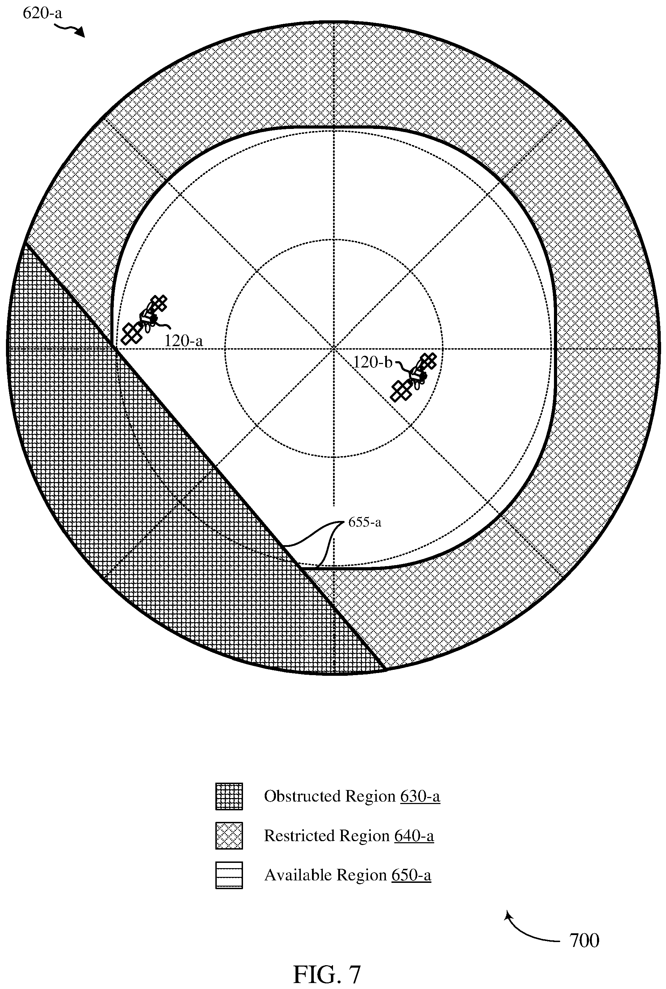

FIG. 7 illustrates an example of using communication performance mapping for communications operations using phased array antennas in accordance with examples as disclosed herein.

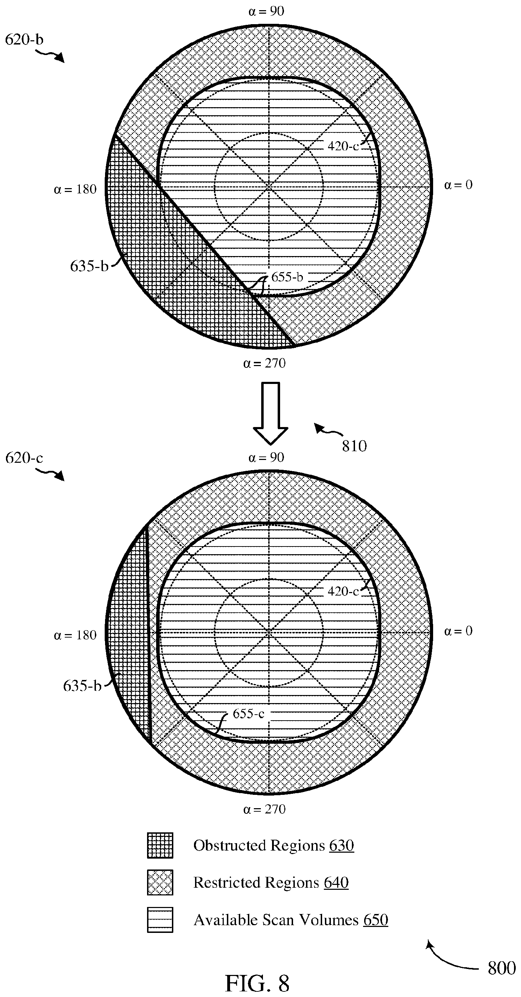

FIG. 8 illustrates an example of using communication performance mapping for positioning phased array antennas in accordance with examples as disclosed herein.

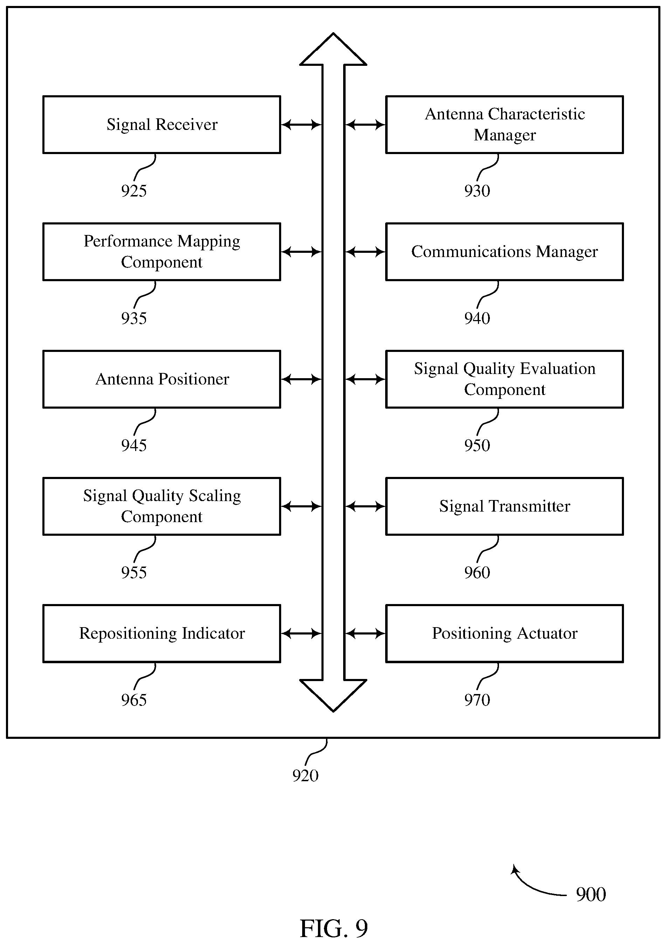

FIG. 9 shows a block diagram of an action response component that supports communication performance mapping for phased array antennas in accordance with aspects of the present disclosure.

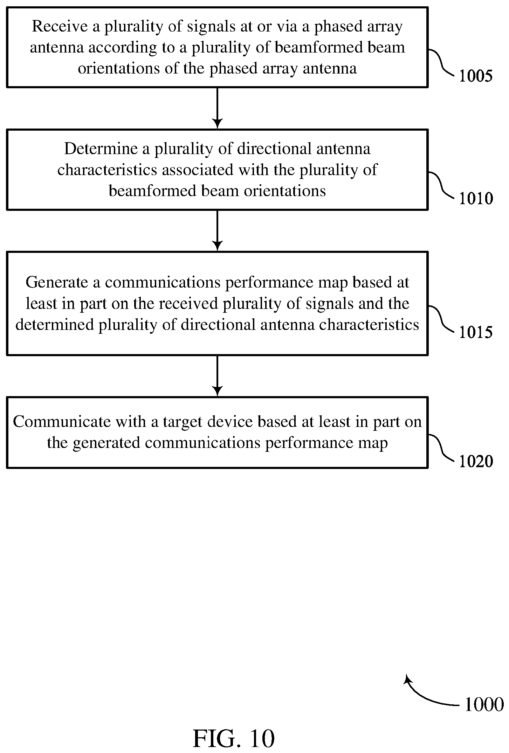

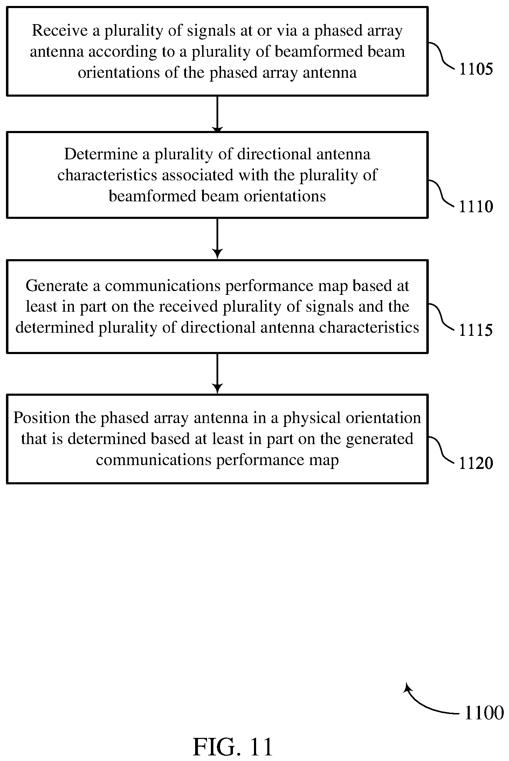

FIGs. 10 and 11 show flowcharts illustrating methods that support communication performance mapping for phased array antennas in accordance with aspects of the present disclosure.

### DETAILED DESCRIPTION

The described features generally relate to systems and techniques for communication performance mapping for operating phased array antennas, such as those that may be used for communications with or via a satellite or other target device. A phased array antenna may include a set of feed elements that are physically arranged in a feed array assembly, and signals of respective feed elements may be manipulated according to various beamforming techniques to support transmit beams (e.g., directional transmission), receive beams (e.g., directional reception), or both. In some examples, a phased array antenna may be associated with characteristics that are directional in nature (e.g., directional communication characteristics, directional signaling characteristics), such as gain characteristics, noise characteristics, beamwidth characteristics, or other characteristics that vary depending on an orientation of signaling relative to a physical positioning or orientation of the phased array (e.g., depending on a relative separation between a beam orientation and a physical boresight of the phased array antenna, depending on a scan angle).

In accordance with examples as disclosed herein, a communications system may be configured to consider directional beam characteristics in the operation of a phased array antenna, such as during installation of, positioning or orienting of, or communications using a phased array antenna. In some examples, a communication system may be configured to generate or utilize a communications performance map for evaluating or characterizing a local signaling environment relative to directional characteristics of a phased array antenna. For example, a system may be configured for receiving or transmitting signals via a phased array antenna according to different orientations of beamformed beams (e.g., beamformed receive beams, beamformed transmit beams), and scale a respective signal quality metric determined for each of the different directions by a directional antenna characteristic of the phased array antenna. The scaled signal quality metrics may be mapped for the different directions (e.g., in an antenna coordinate system, in a global coordinate system), which may be used to establish various boundaries or thresholds for performing communications operations (e.g., an obstruction map, an attenuation map, an intrinsic signaling map associated with a local environment).

In some examples, boundaries or orientations of a communications map may be used for evaluating when a target device is within a range of positions that support communications with the phased array antenna, for evaluating which of a set of target devices is in a position that is favorable for communications with the phased array antenna, or for evaluating when a terminal should hand off from one target device to another. In some examples, directional characteristics of a phased array antenna, or a communications performance map thereof, may be used for evaluating when to reposition or reorient the phased array antenna (e.g., to determine an orientation of a boresight of the phased array antenna), such as when the phased array antenna is provided with a generally fixed or immobilized orientation by an installer, or when the phased array antenna leverages a combination of controlled physical actuation and electronic beamforming. By considering directional characteristics of a phased array antenna in the installation or operation of an antenna assembly (e.g., of a user terminal), various aspects of communications may be improved compared to techniques that do not consider directional characteristics of a phased array antenna.

**FIG. 1** shows a diagram of a communication system 100 (e.g., a satellite communication system) that supports communication performance mapping for phased array antennas in accordance with examples as disclosed herein. A communication system 100 may use various network architectures to support a communications service, such as an architecture including a space segment 101 and ground segment 102. A space segment may include one or more satellites 120 (e.g., one or more communications satellites). A ground segment may include one or more user terminals 150 (e.g., satellite terminals) and one or more access node terminals 130 (e.g., gateway terminals), as well as network devices 141 such as network operations centers (NOCs), and satellite and gateway terminal command centers. The terminals of the communication system 100 (e.g., access node terminals 130) may be connected to each other, and/or to one or more networks 140, via a mesh network, a star network, or the like.

A satellite 120 may include any suitable type of satellite configured for wireless communication with or between access node terminals 130 and user terminals 150. In some examples, some or all of the satellites 120 may be in geostationary orbits, such that their locations with respect to terrestrial devices may be relatively fixed, or fixed within an operational tolerance or other orbital window. Additionally or alternatively, some or all of the satellites 120 may be in orbits where a position of the satellite 120 relative to the earth changes over time (e.g., a non-geostationary orbit such as a low Earth orbit (LEO) or medium Earth orbit (MEO)). Although certain techniques are described herein with reference to a satellite 120 being an example of a target device (e.g., for a user terminal 150 or antenna thereof), the techniques described herein are applicable to other target devices, including other types of target devices having a generally overhead location relative to a user terminal 150 (e.g., a plane, an unmanned aerial vehicle, a drone, a dirigible).

A satellite 120 may receive forward uplink signals 132 from one or more access node terminals 130, and transmit forward downlink signals 172 to one or more user terminals 150. Additionally or alternatively, a satellite 120 may receive return uplink signals 173 from one or more user terminals 150 and transmit return downlink signals 133 to one or more access node terminals 130. Various physical layer modulation and coding techniques may be supported for the communication of signals between access node terminals 130 and user terminals 150 (e.g., via a satellite 120), such as multi-frequency time-division multiple access (MF-TDMA), time division multiple access (TDMA), frequency division multiple access (FDMA), orthogonal frequency division multiple access (OFDMA), code division multiple access (CDMA), or any number of hybrid or other schemes known in the art. In various embodiments, physical layer techniques may be the same for each of the signals 132, 133, 172, and 173, or some of the signals may use different physical layer techniques than other signals. A satellite 120 may support communications using one or more frequency bands, and any number of subbands thereof. For example, the satellite 120 may support operations in the International Telecommunications Union (ITU) Ku, K, or Ka-bands, C-band, X-band, S-band, L-band, V-band, and the like.

A satellite 120 may include an antenna assembly 121, such as a phased array antenna assembly, a phased array fed reflector (PAFR) antenna, or any other mechanism known in the art for transmission and/or reception of signals of a communications service. In some examples, an antenna assembly 121 may support communication via one or more beamformed spot beams 125, which may be referred to as beams, service beams, satellite beams, or any other suitable terminology. Signals may be passed via the antenna assembly 121 to form the spatial electromagnetic radiation pattern of the spot beams 125. In some examples, a spot beam 125 may use or be otherwise associated with a single carrier (e.g., one frequency or a contiguous frequency range). In some examples, a spot beam 125 may be configured to support only user terminals 150, in which case the spot beam 125 may be referred to as a user spot beam or a user beam (e.g., user spot beam 125-a). For example, a user spot beam 125-a may be configured to support one or more forward downlink signals 172 and/or one or more return uplink signals 173 between the satellite 120 and user terminals 150. In some examples, a spot beam 125 may be configured to support only access node terminals 130, in which case the spot beam 125 may be referred to as an access node spot beam, an access node beam, or a gateway beam (e.g., access node spot beam 125-b). For example, an access node spot beam 125-b may be configured to support one or more forward uplink signals 132 and/or one or more return downlink signals 133 between the satellite 120 and access node terminals 130. In other examples, a spot beam 125 may be configured to service both user terminals 150 and access node terminals 130, and thus a spot beam 125 may support any combination of forward downlink signals 172, return uplink signals 173, forward uplink signals 132, or return downlink signals 133 between the satellite 120 and user terminals 150 and access node terminals 130.

A spot beam 125 may support a communications service with target devices (e.g., user terminals 150, access node terminals 130, satellites 120) that are located within a spot beam coverage area 126. A spot beam coverage area 126 may be defined by an area of the electromagnetic radiation pattern of the associated spot beam 125, as projected on the ground or other reference surface, having a signal characteristic (e.g., signal strength, signal-to-noise ratio (SNR), signal-to-interference-plus-noise ratio (SINR)) that is above or otherwise satisfies a threshold. A spot beam coverage area 126 may cover any suitable service area (e.g., circular, elliptical, hexagonal, local, regional, national) and may support a communications service with any quantity of target devices located in the spot beam coverage area 126, which may include target devices located within the associated spot beam 125, but not necessarily at the reference surface of a spot beam coverage area 126, such as airborne terminals.

In some examples, a satellite 120 may support multiple beamformed spot beams 125 each covering respective spot beam coverage areas 126, each of which may or may not overlap with adjacent spot beam coverage areas 126. For example, the satellite 120 may support a service coverage area (e.g., a regional coverage area, a national coverage area) formed by the combination of any number (e.g., tens, hundreds, thousands) of spot beam coverage areas 126. A service coverage area may be broadly defined as a coverage area from which, and/or to which, either a terrestrial transmission source, or a terrestrial receiver may participate in (e.g., transmit and/or receive signals associated with) a communications service via the satellite 120, and may be defined by a plurality of spot beam coverage areas 126. In some systems, the service coverage area for each communications link (e.g., a forward uplink coverage area, a forward downlink coverage area, a return uplink coverage area, and/or a return downlink coverage area) may be different.

User terminals 150 may include any number of devices configured to communicate signals with a satellite 120, or other target device, which may include fixed terminals (e.g., ground-based stationary terminals) or mobile terminals such as terminals on boats, aircraft, ground-based vehicles, and the like. A user terminal 150 may communicate data and information via the satellite 120 or other target device, which may include communications via an access node terminal 130 to a destination device such as a network device 141, or some other device or distributed server associated with a network 140. A user terminal 150 may communicate signals according to a variety of physical layer transmission modulation and coding techniques, including, for example, those defined with the DVB-S2, WiMAX, LTE, and DOCSIS standards.

A user terminal 150 (e.g., a phased array consumer terminal) may include a phased array antenna 155, which may be configured for receiving forward downlink signals 172 (e.g., from a satellite 120), for transmitting return uplink signals 173 (e.g., to a satellite 120), or both. In some examples, a user terminal 150 may be configured for uni-directional or bi-directional communications with the satellite 120 via a spot beam 125 (e.g., user spot beam 125-a). A phased array antenna 155 may include an array (e.g., a two-dimensional array) of feed elements 156 that are physically arranged in a feed array assembly, and signals of respective feed elements 156 may be manipulated according to various beamforming techniques (e.g., phase and/or amplitude manipulation) to support terminal spot beams (not shown), such as transmit beams (e.g., directional transmission) and receive beams (e.g., directional reception). In other words, communication via a phased array antenna 155 may be electronically configurable using the array of feed elements 156 to align signal transmission and/or reception along a desired direction (e.g., a terminal spot beam orientation).

As used herein, a feed element 156 may refer to a receive antenna element, a transmit antenna element, or an antenna element configured to support both transmitting and receiving (e.g., a transceiver element). A receive antenna element may include a physical transducer (e.g., an RF transducer) that converts an electromagnetic signal to an electrical signal, and a transmit antenna element may include a physical transducer that emits an electromagnetic signal when excited by an electrical signal. The same physical transducer may be used for transmitting and receiving, in some cases. Each of the feed elements 156 may include, for example, a feed horn, a polarization transducer (e.g., a septum polarized horn, which may function as two combined elements with different polarizations), a multi-port multi-band horn (e.g., dual-band 20 GHz/30 GHz with dual polarization LHCP/RHCP), a cavity-backed slot, an inverted-F, a slotted waveguide, a Vivaldi, a Helical, a loop, a patch, or any other configuration of an antenna element or combination of interconnected sub-elements. Each of the feed elements 156 may also include, or be otherwise coupled with an RF signal transducer, a low noise amplifier (LNA), or high power amplifier (HPA), and may be coupled with transponders for performing other signal processing such as frequency conversion, beamforming processing, and the like.

A phased array antenna 155 may be part of an antenna assembly 151 (e.g., a user terminal antenna assembly), which may also include various hardware for mounting or orienting the phased array antenna 155. An antenna assembly 151 may also include circuits and/or processors for converting (e.g., performing frequency conversion, modulating/demodulating, multiplexing/demultiplexing, filtering, forwarding) between radio frequency (RF) communication signals (e.g., forward downlink signals 172 and/or return uplink signals 173), and user terminal communications signals 157 communicated between the phased array antenna 155 and a user terminal controller 158. Such circuits and/or processors may be included in an antenna assembly 151, which may be referred to as an integrated antenna assembly or processor-integrated antenna assembly. Additionally or alternatively, the user terminal controller 158 may include circuits and/or processors for performing various RF signal operations (e.g., receiving, performing frequency conversion, modulating/demodulating, multiplexing/demultiplexing, etc.). The antenna assembly 151 may also be known as a satellite outdoor unit (ODU), and the user terminal controller 158 may be known as an indoor unit (IDU).

A user terminal 150 may be connected via a wired or wireless connection 161 to one or more consumer premises equipment (CPE) 160, and may provide network access service (e.g., access to a network 140, Internet access) or other communication services (e.g., broadcast media) to CPEs 160 via the communication system 100. The CPE(s) 160 may include user devices such as, but not limited to, computers, local area networks, internet appliances, wireless networks, mobile phones, personal digital assistants (PDAs), other handheld devices, netbooks, notebook computers, tablet computers, laptops, display devices (e.g., TVs, computer monitors), printers, and the like. The CPE(s) 160 may also include any equipment located at a premises of a subscriber, including routers, firewalls, switches, private branch exchanges (PBXs), Voice over Internet Protocol (VoIP) gateways, and the like. In some examples, the user terminal 150 provides for two-way communications between the CPE(s) 160 and network(s) 140 via the satellite 120 and the access node terminal(s) 130.

An access node terminal 130 may service forward uplink signals 132 and return downlink signals 133 (e.g., to and from a satellite 120). Access node terminals 130 may also be known as ground stations, gateways, gateway terminals, or hubs. An access node terminal 130 may include an access node terminal antenna system 131 and an access node controller 135. The access node terminal antenna system 131 may be two-way capable and designed with adequate transmit power and receive sensitivity to communicate reliably with the satellite 120. In some examples, an access node terminal antenna system 131 may comprise a parabolic reflector with high directivity in the direction of a satellite 120 and low directivity in other directions. An access node terminal antenna system 131 may comprise a variety of alternative configurations and include operating features such as high isolation between orthogonal polarizations, high efficiency in the operational frequency bands, low noise, and the like.

In some examples, an access node terminal 130 (e.g., an access node controller 135) may schedule traffic to user terminals 150. Additionally or alternatively, the scheduling may be performed in other parts of communication system 100 (e.g., at one or more network devices 141, which may include network operations centers (NOC) and/or gateway command centers). A satellite 120 may communicate with an access node terminal 130 by transmitting return downlink signals 133 and/or receiving forward uplink signals 132 via one or more spot beams 125 (e.g., access node spot beam 125-b, which may be associated with a respective access node spot beam coverage area 126-b). An access node spot beam 125-b may, for example, support a communications service for one or more user terminals 150 (e.g., relayed by the satellite 120), or any other communications between the satellite 120 and the access node terminal 130.

An access node terminal 130 may provide an interface between the network 140 and the satellite 120, and may be configured to receive data and information directed between the network 140 and one or more user terminals 150. An access node terminal 130 may format the data and information for delivery to respective user terminals 150. Additionally or alternatively, an access node terminal 130 may be configured to receive signals from the satellite 120 (e.g., from one or more user terminals 150) directed to a destination accessible via network 140. An access node terminal 130 may also format the received signals for transmission on network 140.

The network(s) 140 may be any type of network and can include, for example, the Internet, an Internet Protocol (IP) network, an intranet, a wide-area network (WAN), a metropolitan area network (MAN), a local-area network (LAN), a virtual private network (VPN), a virtual LAN (VLAN), a fiber optic network, a hybrid fiber-coax network, a cable network, a public switched telephone network (PSTN), a public switched data network (PSDN), a public land mobile network, and/or any other type of network supporting communications between devices as described herein. Network(s) 140 may include both wired and wireless connections as well as optical links. Network(s) 140 may connect the access node terminal 130 with other access node terminals that may be in communication with the satellite 120 or with other satellites. One or more network device(s) 141 may be coupled with the access node terminal 130 and may control aspects of the communication system 100. In various examples a network device 141 may be co-located or otherwise nearby the access node terminal 130, or may be a remote installation that communicates with the access node terminal 130 and/or network(s) 140 via wired and/or wireless communications link(s).

In some examples, a phased array antenna 155 may be associated with characteristics (e.g., communication characteristics, signaling characteristics) that are directional in nature, such as gain characteristics, noise characteristics, beamwidth characteristics, or other characteristics that vary depending on a direction of beamforming relative to a physical positioning or orientation of the phased array (e.g., depending on a relative separation between a beam orientation and a physical boresight of the phased array). In accordance with examples as disclosed herein, various components of the communication system 100 may be configured to consider directional beam characteristics of a phased array antenna 155 for the operation of the user terminal 150 (e.g., for operation of the phased array antenna 155), such as during installation of, positioning or orienting of, or communications using the phased array antenna 155.

In some examples, one or more components of the communication system 100 (e.g., a user terminal controller 158, an access node controller 135, a network device 141) may be configured to generate a communications performance map for evaluating or characterizing a communication or signaling environment local to a user terminal 150, relative to directional characteristics of a phased array antenna 155. For example, a user terminal 150 may be configured for receiving or transmitting signals via a phased array antenna 155 according to different directions of beamformed beams (e.g., beamformed terminal spot beams, beamformed receive beams of the phased array antenna 155, beamformed transmit beams of the phased array antenna 155), and scale a respective signal quality metric determined for each of the different directions by a directional antenna characteristic of the phased array antenna 155 (e.g., associated with a respective direction). The scaled signal quality metrics may be mapped for the different directions (e.g., in an antenna coordinate system, in a global coordinate system), which may be used to establish various boundaries or directional thresholds for performing communications operations (e.g., an obstruction map, an attenuation map, an intrinsic signaling map associated with a local environment). For example, boundaries of a communications map may be used for evaluating when a target device (e.g., a satellite 120) is within a range of positions that support communications with the phased array antenna 155, for evaluating which of a set of target devices is in a position that is favorable for communications with the phased array antenna 155, or for evaluating when the user terminal 150 should hand off from one target device to another. By considering directional characteristics of the phased array antenna 155, a user terminal 150 (e.g., a user terminal controller 158), an access node terminal 130 (e.g., an access node controller 135), or a network device 141, or various combinations thereof, may support improved communications performance, improved utilization of communications resources (e.g., improved spectral efficiency), smoother handover between target devices, or reduced occurrences of signal dropout, among other benefits, compared to techniques that do not consider directional characteristics of phased array antennas.

In some examples, directional characteristics of a phased array antenna 155, or a communications performance map thereof, may be used for evaluating how or when to reposition or reorient the phased array antenna 155. For example, when a phased array antenna 155 is provided with a generally fixed or immobilized orientation by an installer, directional characteristics of a phased array antenna 155 may be utilized to determine a preferred physical orientation of the phased array antenna 155, such as aligning a direction or scan volume of the phased array antenna 155 with a clear field of view (e.g., relative to obstructions or other attenuation sources), with a direction of probable target device locations, or various combinations thereof. In some examples, when an antenna assembly 151 leverages a combination of physical actuation (e.g., an actuator or positioner of an antenna assembly 151) and electronic beamforming, directional characteristics of the phased array antenna 155 may be used to determine whether one or more actuators (e.g., of the antenna assembly 151) should be controlled to reorient the phased array antenna 155 to a new orientation (e.g., to align the phased array antenna 155 with a current or future position of a target device), whether one or more actuators should be maintained in a steady position (e.g., while tracking a target device using electronic beamforming), among other positioning decisions or evaluations. By considering directional characteristics of the phased array antenna 155 in the alignment or positioning of a phased array antenna 155, the phased array antenna 155 may be aligned with an orientation that maximizes an unobstructed field of view within a scan volume of the phased array antenna, or the phased array antenna 155 may be used with fewer or less expensive actuators that may not support smoothly or continuously tracking target devices, among other benefits, compared to positioning techniques that do not consider directional characteristics of the phased array antenna 155.

FIG. 2 illustrates an example of an antenna assembly 151-a that supports communication performance mapping for phased array antennas in accordance with examples as disclosed herein. The antenna assembly 151-a includes a phased array antenna 155-a, a mounting structure 220, and a positioner 235 that is coupled between the mounting structure 220 and the phased array antenna 155-a. The positioner 235 may include one or more components that support positioning or orienting the phased array antenna 155-a (e.g., for static or fixable positioning, for controlled or actuated positioning). In various examples, the mounting structure 220 may be mounted or attached to a generally fixed, ground-based location (e.g., to a building, to a mounting pole), or the mounting structure 220 may be mounted or attached to or be a part of a moving installation (e.g., a vehicle, a plane, a boat, a drone, a UAV).

In some examples, the antenna assembly 151-a may include circuits and/or processors to process RF signals transmitted by and/or received at the phased array antenna 155-a (e.g., when the antenna assembly 151-a is a processor-integrated antenna assembly), circuits and/or processors for controlling an orientation of the phased array antenna 155-a (e.g., for controlling an actuator of the positioner 235), or various combinations thereof. In some examples, the antenna assembly 151-a may be coupled with an IDU (e.g., a user terminal controller 158) for a user terminal 150 via a communications feed (e.g., when the antenna assembly 151-a is configured as an ODU). The phased array antenna 155-a may include an array of feed elements 156 (e.g., a two-dimensional array, not shown in FIG. 2), each of which may include or be otherwise associated with a transceiver configured for communicating signals between the phased array antenna 155-a and a target device (e.g., a satellite 120). The phased array antenna 155-a may be associated with a boresight 240 (e.g., a physical boresight, a physical orientation), which may illustrate a principal axis or alignment of the phased array antenna 155-a. In some examples, the boresight 240 may be aligned in or correspond to a direction of peak or maximum gain of the phased array antenna 155-a (e.g., in an array reference frame 280). In some examples, the boresight 240 may be a direction perpendicular to a surface of the phased array antenna 155-a, such as a surface associated with apertures of the feed elements 156, which may be a flat surface, a curved surface, or other types of surfaces of the phased array antenna 155-a.

Aspects of the antenna assembly 151-a, or components or operations thereof, may be described with reference to a global reference frame 260, a base reference frame 270, an array reference frame 280, or various combinations thereof. In some examples, the reference frames may be used to describe position or orientation information associated with the antenna assembly 151-a and one or more target devices, such as a satellite 120. For example, the global reference frame 260, the base reference frame 270, or the array reference frame 280 may be used to identify a location of the antenna assembly 151-a or one or more target devices. Additionally or alternatively, the global reference frame 260, the base reference frame 270, and/or the array reference frame 280 may be used to identify a vector or relative orientation between the antenna assembly 151-a and one or more target devices. Although each of the reference frames may be described as a three-dimensional reference frame (e.g., a coordinate system) having mutually orthogonal axes, one or more of a global reference frame 260, a base reference frame 270, or an array reference frame 280 may be other types of reference frames (e.g., a polar reference frame, an angular reference frame) to support techniques in accordance with examples as disclosed herein.

The global reference frame 260 may be a three-dimensional, topocentric Cartesian coordinate frame. The X axis of the global reference frame 260 may be aligned with the compass heading North (e.g., magnetic North or true North). The Y axis of the global reference frame 260 may be aligned with the compass heading East. The Z axis of the global reference frame 260 may be aligned with an earth radian that emanates from the origin of the global reference frame 260 and extends through the center of the earth. The described alignment of the global reference frame 260 may be referred to as a North, East, Down (NED) alignment. Each axis of the global reference frame 260 may be orthogonal and form a 90 degree angle with each of the other axes. In some examples, the origin of the global reference frame 260 may be coincident with a latitude and longitude of the antenna assembly 151-a. In some examples, an altitude or elevation of the global reference frame 260 may assumed to be zero (e.g., where the origin of the global reference frame 260 is at an earth surface, or an otherwise suitable reference elevation, such as sea level). In some examples, the origin of the global reference frame 260 may be at the center of the earth, the Z axis may be aligned with the compass heading North (e.g., magnetic North or true North), and the X axis and the Y axis may each be aligned with a different earth longitude.

The base reference frame 270 may also be a three-dimensional Cartesian coordinate frame, and may be associated with or otherwise correspond to the mounting structure 220. The X' axis of the base reference frame 270 may be aligned along a first direction of the mounting structure 220 (e.g., along a width direction, along a first edge of a mounting surface), and the Y' axis of the base reference frame 270 may be aligned along a second direction of the mounting structure 220 (e.g., along a depth or length direction, along a second edge of the mounting surface). In some examples, a plane defined by the X' axis and Y' axis may be parallel to or otherwise representative of a mounting plane or other reference plane of the mounting structure 220. The Z' axis of the base reference frame 270 may be aligned along a direction perpendicular to the X' axis and to the Y' axis (e.g., perpendicular to the mounting surface or other reference plane). Unlike the global reference frame 260, which may remain fixed (e.g., in attitude, or in position, or in attitude and position) relative to an earth position or orientation, the base reference frame 270 may follow the mounting structure 220. In other words, the origin and orientation of the base reference frame 270 may be fixed relative to the mounting structure 220. In some examples, an attitude of the mounting structure 220 (e.g., relative to the earth, relative to the global reference frame 260) may be defined by a set of one or more rotations (e.g., roll, pitch, and yaw) or other transformations between the base reference frame 270 and the global reference frame 260.

The array reference frame 280 may also be a three-dimensional Cartesian coordinate frame, and may be associated with or otherwise correspond to the phased array antenna 155-a. The X" axis of the array reference frame 280 may be aligned along a first direction of the phased array antenna 155-a (e.g., along a width direction, along direction of a row of feed elements 156), and the Y" axis of the array reference frame 280 may be aligned along a second direction of the phased array antenna 155-a (e.g., along a depth direction, along a direction of a column of feed elements 156). In some examples, a plane defined by the X" axis and Y" axis may be parallel to or otherwise representative of an aperture surface or other reference plane of the phased array antenna 155-a. The Z" axis of the array reference frame 280 may be aligned along a direction perpendicular to the X" axis and to the Y" axis (e.g., perpendicular to the aperture surface or other reference plane), and may be aligned with or coincident with the boresight 240. In some examples, the orientation of the array reference frame 280, or the orientation and the origin of the array reference frame 280, may be fixed with respect to the phased array antenna 155-a. In some examples, the origin of the array reference frame 280 may be co-located with the origin of the base reference frame 270 (e.g., at a nominal location of the antenna assembly 151-a), which may be a defined or programmed position (e.g., by an installer), or may be a position that is determined using a global positioning system (GPS) receiver (e.g., of the antenna assembly 151-a, of a user terminal 150 that includes the antenna assembly 151-a), among other systems.

In some examples, an attitude or orientation of the phased array antenna 155-a (e.g., relative to the mounting structure 220, relative to the base reference frame 270) may be defined by a set of one or more rotations (e.g., an azimuth rotation, an elevation rotation, a skew rotation) between the array reference frame 280 and the base reference frame 270, which may be associated with a physical orientation 275 (e.g., a relative orientation between the array reference frame 280 and the base reference frame 270). In some examples, a base reference frame 270 may be omitted, or a base reference frame 270 may be aligned with a global reference frame 260, and translations, rotations, or both (e.g., the physical orientation 275) may be directly (e.g., physically, mathematically, computationally) between the array reference frame 280 and the global reference frame 260. In some examples, rotations of the phased array antenna 155-a may be supported or defined by aspects of (e.g., mechanisms of, couplings of, actuators of) the positioner 235 that is coupled between the mounting structure 220 and the phased array antenna 155-a. For example, the positioner 235 may include one or more rotational or spherical bearings, one or more pivot joints or couplings, one or more ball joints or couplings, one or more actuators, or various combinations thereof that support orienting the phased array antenna 155-a relative to the mounting structure 220 (e.g., orienting the array reference frame 280 relative to the base reference frame 270 or relative to the global reference frame 260, orienting about an azimuth axis, an elevation axis, a cross-elevation axis, or a skew axis, or combinations thereof).

In some examples (e.g., when the X' axis and the Y' axis are parallel with a horizontal plane or direction), rotation of the phased array antenna 155-a about the Z' axis of the base reference frame 270 may correspond to an azimuth adjustment of the phased array antenna 155-a (e.g., of the boresight 240), and the positioner 235 may include a rotational or spherical coupling or actuator that supports a relative rotation of the phased array antenna 155-a about at least the Z' axis. In some examples, rotation of the phased array antenna 155-a about the X' axis of the base reference frame 270, about the Y' axis of the base reference frame 270, or generally about any axis parallel to a plane defined by the X' axis and the Y' axis, may correspond to an elevation adjustment of the phased array antenna 155-a (e.g., of the boresight 240), and the positioner 235 may include a rotational or spherical coupling or actuator that supports a relative rotation of the phased array antenna 155-a about at least the X' axis or the Y' axis or combination thereof, or otherwise relative to the X'-Y' plane. In some examples, rotation of the phased array antenna 155-a about the X" axis of the array reference frame 280 may correspond to an elevation adjustment of the phased array antenna 155-a (e.g., in configurations where the X" axis is maintained with an orientation that is parallel to a plane defined by the X' axis and the Y' axis, in configurations where the X" axis is parallel with a horizontal plane or direction), and the positioner 235 may include a rotational or spherical coupling or actuator that supports a relative rotation of the phased array antenna 155-a about at least the X" axis. In some examples, rotation of the phased array antenna 155-a about the Z" axis of the array reference frame 280 (e.g., about the boresight 240) may correspond to a skew adjustment of the phased array antenna 155-a, and the positioner 235 may include a rotational or spherical coupling or actuator that supports a relative rotation of the phased array antenna 155-a about at least the Z" axis. Other examples of an antenna assembly 151 in accordance with examples as disclosed herein may include different definitions of relative orientations or translations thereof (e.g., different reference frame transformations), or associated couplings or actuation.

The phased array antenna 155-a may support the communication of electromagnetic signals with a target device according to one or more beams 250 (e.g., a terminal spot beam). For example, forward downlink signals 172 may be received at the phased array antenna 155-a using a receive beam 250 (e.g., a downlink beam, a directional reception), and return uplink signals 173 may be transmitted by the phased array antenna 155-a using a transmit beam 250 (e.g., an uplink beam, a directional transmission). A beam 250 may be associated with (e.g., directed along, focused along) a beam orientation 255 (e.g., a beamformed beam orientation, an orientation of a beamformed beam 250, a terminal spot beam direction), which may be defined relative to the boresight 240. For example, the beam orientation 255 may be associated with a first angle, α, which may be an angle of the beam orientation 255 within a plane defined by the X" axis and the Y" axis of the array reference frame 280 (e.g., a beam azimuth angle, an angle measured between a projection of the beam orientation 255 on the X"-Y" plane and the direction of the X" axis), and the beam orientation 255 may be associated with a second angle, β, which may be an angle of the beam orientation 255 relative to the boresight 240 (e.g., a scan angle, a beam elevation angle, a beam declination angle, an angle measured between the direction of the beam orientation 255 and the direction of the Z" axis). Although the beam 250 is shown as a cone originating from a central point or origin of the phased array antenna 155-a (e.g., to illustrate relative orientations), a beam 250 may be formed via electromagnetic signaling distributed across the surface of the phased array antenna 155-a. For example, a beam 250 may be formed in accordance with the beam orientation 255 by way of constructive or deconstructive interactions (e.g., as defined in a beamforming configuration) between or among feed element signals of the feed elements 156 distributed across the phased array antenna 155-a (e.g., along the X" direction, along the Y" direction, or both).

In some examples, the positioner 235 may support aspects of a static or semi-static installation, where the phased array antenna 155-a (e.g., the boresight 240) may be physically pointed or oriented by an installer (e.g., about one or more axes, using one or more static or 'fixable' positioners) in the general direction of a target device, or in the general direction of a statistical distribution of positions of potential target devices, or in a direction of a clear line-of-sight, among other directions (e.g., in a nominal pointing direction). The positioner 235 may include a clamping or fixing mechanism configured for maintaining or immobilizing the orientation of the phased array antenna 155-a (e.g., the physical orientation 275, an orientation relative to the mounting structure 220) as oriented by the installer about one or more axes (e.g., of a coupling of the positioner 235, of a base reference frame 270, of an array reference frame 280). In such examples, directional transmission or reception over a beam 250 may be based on the maintained physical alignment of the phased array antenna 155-a (e.g., the physical orientation 275) and an orientation as provided by electronic beamforming (e.g., a beam orientation 255, an orientation using feed element signals communicated via respective feed elements 156).

Additionally or alternatively, in some examples the positioner 235 may support aspects of a dynamic or controlled installation or positioning, where the phased array antenna 155-a (e.g., the boresight 240) may be oriented by one or more actuators of the positioner 235 (e.g., an elevation actuator, an azimuth actuator, a cross-elevation actuator, or a skew actuator, or a combination thereof). An actuator of the positioner 235 may be responsive to a controller (e.g., a controller of the antenna assembly 151-a, a controller of a user terminal 150 that includes the antenna assembly 151-a, a user terminal controller 158, an access node controller 135, a network device 141) that is operable to cause the actuator to orient the phased array antenna 155-a based at least in part on a desired or determined orientation (e.g., a physical orientation 275, an orientation of a boresight 240), which may be determined at a user terminal 150 or another component of a communication system 100 (e.g., at an access node terminal 130, at a network device 141, at an NOC, at a gateway command center). In such examples, directional transmission or reception may be based on an orientation as provided by an installer and subsequently maintained, or by an orientation as provided by one or more actuators, or by an orientation as provided by electronic beamforming, or by various combinations thereof.

The phased array antenna 155-a may be associated with characteristics (e.g., communication characteristics, signaling characteristics) that are directional in nature (e.g., based on a relative separation between a beam orientation 255 and a boresight 240). In some examples, performance of the phased array antenna 155-a may generally degrade as the angle, β, increases (e.g., with increasing scan angle). For example, beams 250 that are aligned with, or that are relatively near to an alignment of the boresight 240 (e.g., beam orientations 255 having a relatively small angle, β), may be associated with relatively higher signal gain, relatively narrower beam width, relatively lower signal noise or shorter sidelobes, among other directional characteristics. Beams 250 that are relatively farther from an alignment of the boresight 240 (e.g., beam orientations 255 having a relatively large angle, β), may be associated with relatively lower signal gain, relatively broader beam width, relatively higher signal noise or sidelobes, among other characteristics. In some examples, an impedance presented to circuitry associated with processing feed element signals, such as front-end amplifiers, may change with scan angle, and accordingly one or more analog or digital signal processing characteristics (e.g., signal strength, SNR, SINR, noise floor) may also be directional (e.g., according to a relative angle between a beam orientation 255 and a boresight 240).

In some examples, a directional characteristic of the phased array antenna 155-a may be associated with one or more physical characteristics that are asymmetric (e.g., different between an X" direction and a Y" direction, different according to an angle, α). For example, a phased array antenna 155-a may include columns of feed elements 156 that are narrower than rows of feed elements (e.g., in a feed element array having a greater quantity of feed elements 156 in a row direction or X" direction than in a column direction or Y" direction). In such examples, the phased array antenna 155-a may support forming a beam 250 that is narrower along an X"-direction than along a Y" direction (e.g., a beam having a rectangular, elliptical, or otherwise elongated cross-section). In various examples (e.g., when a quantity of feed elements 156 in an X" direction is different than in a Y" direction), gain characteristics, noise characteristics, sidelobe characteristics, beam width characteristics, or other characteristics or combinations of characteristics, may be different along different directions relative to the phased array antenna (e.g., relative to an angle, α). Moreover, characteristics of the phased array antenna 155-a may additionally or alternatively vary based on various operating characteristics or conditions, such as frequency, signaling direction (e.g., transmission or reception), operating temperature, operating voltage, or other characteristics or conditions.

In accordance with various examples as disclosed herein, a communication system 100 may be configured to consider directional beam characteristics in the operation of the phased array antenna 155-a, such as during installation of, positioning or orienting of, or communications using the phased array antenna 155-a. In some examples, such techniques may be used to improve an evaluation of a local attenuation environment (e.g., distinguishing between path loss of a local environment and a scan loss of a phased array antenna), or an evaluation of communications to be performed, thereby improving quality of communication between a user terminal 150 and a target device such as a satellite 120. In some examples, such techniques may be used to select an orientation (e.g., a physical orientation 275, an orientation of a boresight 240) based on evaluations of the local environment, such as biasing a scan volume of the phased array antenna 155-a towards an unobstructed field of view. For example, if a building or other obstruction is identified in a westerly direction, boresight 240 may be biased in an easterly direction to improve utility of the phased array antenna 155-a. Additionally or alternatively, in some examples, such techniques may be used to bias a scan volume of the phased array antenna towards a probable location of target devices (e.g., towards a direction where an orbital path of one or more satellites 120 is likely to pass). By considering directional characteristics of the phased array antenna 155-a in the operation of the antenna assembly 151-a (e.g., of a user terminal 150 that includes the antenna assembly 151-a), various aspects of communications may be improved compared to techniques that do not consider directional characteristics of a phased array antenna.

**FIG. 3A** shows block diagram 300 of a receive beamforming network 310 that supports communication performance mapping for phased array antennas in accordance with examples as disclosed herein. In various examples, one or more components of the receive beamforming network 310 may be included in an antenna assembly 151, or distributed between an antenna assembly 151 and another component of a user terminal 150 (e.g., a user terminal controller 158).

The receive beamforming network 310 may take in feed element signals 315 (e.g., feed element reception signals), received from m feed elements 156, and provide a beam reception signal 335 (e.g., a beam signal, a spot beam reception signal) corresponding to a beam 250 (e.g., a receive beam 250). Using various signal manipulation techniques, the beam reception signal 335 may be provided according to a beam orientation 255, a beam width, or various other characteristics of a beam 250. For example, each feed element signal 315 from a respective feed element 156 may be fed into a respective adjustment component 320, which may include, among other components, circuitry or digital processing operable to perform an amplitude adjustment, a phase adjustment, or both. Each instance of an adjustment component 320 may perform an amplitude and phase adjustment to the respective feed element signal 315 (e.g., via receive beam weights of a receive beamforming weight vector associated with the beam 250) to provide a respective adjusted signal 325. The adjusted signals 325 may be summed using a summation component 330 to provide the beam reception signal 335 from the beamformed beam 250. The beam reception signal 335 may correspond to a directional reception signal and may, in some examples, correspond to a communications signal or a communications stream (e.g., a downlink communications stream).

The process of adjusting the amplitude and phase of the feed element signals 315 (e.g., by the adjustment components 320) may be mathematically described as the multiplication of the complex base band representation of the signal by a complex number (e.g., a complex weight). Letting the complex number be represented as w = I + jQ, the magnitude of w may represent the amplitude adjustment and the phase of w may represent the phase adjustment. In some examples, an adjustment component 320 may include a vector multiplier circuit that can receive (e.g., from a controller of a user terminal 150, from a beamforming controller) the I and Q values, and circuits that have independent phase and amplitude adjustment mechanisms and take as input the desired amplitude and phase adjustments. The receive beamforming network 310 may provide dynamic (e.g., changing) and programmable complex beam weight values on each of the m adjustment components 320. The receive beamforming network 310 may include amplification stages (e.g., low-noise amplifiers) within the beamformer structure to account for some or all of the insertion losses of the devices used to perform the beamforming functions (e.g., splitting, weighting, and combining). In some examples, the receive beamforming network may further include downconverters, filters, or other signal processing components.

The signal processing of the receive beamforming network 310 may be carried out in the analog and/or digital signal domain. For example, when signal processing is carried out by the receive beamforming network 310 in the digital domain, the receive beamforming network 310 may include one or more analog-to-digital converters (e.g., converting the feed element signals 315 to the digital domain). In other examples, each of the feed elements 156 may be associated with its own analog-to-digital converter that provides a digital feed element signal 315 to the receive beamforming network 310. In examples that include digital domain processing, the pathway hardware may provide a beam reception signal 335 in the digital domain. In other examples, the signal processing of the receive beamforming network 310 may be carried out entirely in the analog domain, such that the feed element signals 315 are received in the analog domain, and processed signals remain in the analog domain through the pathway hardware that provides the beam reception signal 335 in the analog domain. In some examples, an analog-to-digital converter (e.g., a demodulator) may be used to convert the analog beam reception signal 335 of the pathway hardware into the digital domain.

**FIG. 3B** shows block diagram 350 of a transmit beamforming network 360 (e.g., a feed forming network (FFN)) that supports communication performance mapping for phased array antennas in accordance with examples as disclosed herein. In various examples, one or more components of the transmit beamforming network 360 may be included in an antenna assembly 151, or distributed between an antenna assembly 151 and another component of a user terminal 150 (e.g., a user terminal controller 158).

The transmit beamforming network 360 may take in a beam transmission signal 365 (e.g., a spot beam transmission signal) and provide, to *n* feed elements 156 (e.g., different than or the same as the m feed elements 156 described with reference to the receive beamforming network 310), respective feed element signals 385 (e.g., feed element transmission signals). The beam transmission signal 365 may correspond to a signal for directional transmission and may, in some examples, correspond to a communications signal or a communications stream (e.g., an uplink communications stream).

Using various signal manipulation techniques, the beam reception signal 335 may be transmitted according to a beam orientation 255, a beam width, or various other characteristics of a beam 250. For example, the beam transmission signal 365 may be split, using a splitter 370, into *n* beam signal copies 375 (e.g., duplicate signals), one for each feed element 156. Each beam signal copy 375 for a respective feed element 156 may be fed into a respective adjustment component 380, which may include, among other components, circuitry or digital processing operable to perform an amplitude and phase adjustment. Each instance of an adjustment component 380 may perform an amplitude and phase adjustment to the respective beam signal copy 375 (e.g., using transmit beam weights of a transmit beamforming weight vector associated with a beam 250) to provide a respective feed element signal 385 for transmission by a respective feed element 156.

The process of adjusting the amplitude and phase of the beam signal copies 375 may also be mathematically described as the multiplication of the complex base band representation of the signal by a complex number. In some examples, an adjustment component 380 may include a vector multiplier circuit that can receive (e.g., from a controller of a user terminal 150, from a beamforming controller) the I and Q values, and circuits that have independent phase and amplitude adjustment mechanisms and take as input the desired amplitude and phase adjustments. The transmit beamforming network 360 may provide dynamic (e.g., changing) and programmable complex beam weight values on each of the *n* adjustment components 380. The transmit beamforming network 360 may also include amplification stages (e.g., high-power amplifiers) within the beamformer structure to account for some or all of the insertion losses of the devices used to perform the beamforming functions (e.g., splitting, weighting, and combining).

The signal processing of the transmit beamforming network 360 may be carried out in the analog and/or digital signal domain. For example, when signal processing is carried out by the transmit beamforming network 360 in the digital domain, the transmit beamforming network 360 may include one or more digital-to-analog converters (e.g., converting digital feed element signals 385 to the analog domain for transmission by transducers of the feed elements 156, a modulator). In other examples, each of the feed elements 156 may be associated with its own digital-to-analog converter that provides an analog signal to the respective feed element 156 for transmission. In some examples, the signal processing of the transmit beamforming network 360 may be carried out entirely in the analog domain, such that a digital beam transmission signal 365 is received in or converted into the analog domain, and processed signals remain in the analog domain through the pathway hardware that provides the feed element signals 385 in the analog domain.

**FIG. 4** illustrates an example of an antenna characteristic map 400 that supports communication performance mapping for phased array antennas in accordance with examples as disclosed herein. The antenna characteristic map 400 illustrates an example for mapping directional antenna characteristics 410 of a phased array antenna 155, which may be associated with different beamformed beam orientations 255.

The example of antenna characteristic map 400 illustrates a gain (e.g., in decibels (dB), a receive gain, a transmit gain, a relative gain, a beam gain) of a phased array antenna 155 mapped with respect to angles α and β, in degrees, which may be angles relative to an array reference frame 280 as described with reference to FIG. 2. The origin 405 of the antenna characteristic map 400 may correspond to an orientation of a boresight 240, which may represent a nominal or principal physical orientation of the phased array antenna 155. In the example of antenna characteristic map 400, the illustrated gain may be assumed to be a maximum or unity gain (e.g., 0db gain, zero relative attenuation) at the origin 405.

As illustrated by the antenna characteristic map 400, performance of a phased array antenna 155 may degrade as the angle, β, increases (e.g., moving away from the origin 405 with increasing scan angle). For example, antenna characteristic 410-a, at an orientation of α = 90 degrees and β = 45 degrees (e.g., a beam orientation 255), may be equal to -3dB, which may illustrate a degree of relative attenuation or loss of gain (e.g., antenna gain) compared to a beam orientation 255 that is aligned with a boresight 240 (e.g., an antenna characteristic 410 at the origin 405). In some examples, attenuation of an antenna characteristic may be associated with a mathematical formulation, such as having a rolloff that follows or is approximated by an exponential relationship relative to the angle, β (e.g., gain = k * cos(β)^{1.3}). In some examples, attenuation at a maximum scan angle of a phased array antenna (e.g., at or near β = 90) may be as high as attenuation through certain obstructions, such as attenuation through trees or other vegetation.

Attenuation or roll-off of an antenna characteristic 410 (e.g., with increasing scan angle, with increasing angle β) may be based on various factors, or combinations thereof, such as decreasing receive sensitivity or transmit power of feed elements 156 at shallower angles of incidence (e.g., smaller angles relative to an X"-Y" plane), limitations in constructive or destructive signal propagation with increasing β for a given quantity or arrangement of feed elements 156, increased impedance in circuitry for beamforming at greater scan angles, among other factors. In some examples, attenuation or roll-off of an antenna characteristic 410 may be related to dimensions of a phased array antenna 155. For example, a generally square array of feed elements 156 may be associated with generally square to circular contours of an antenna characteristic map 400, a generally rectangular array of feed elements 156 may be associated with generally rectangular to elliptical contours of an antenna characteristic map 400, and so on.

The antenna characteristic map 400 illustrates one example of mapping antenna characteristics 410 for a field of view of a phased array antenna 155, and a phased array antenna 155 may be associated with any quantity of one or more antenna characteristic maps 400. For example, a phased array antenna 155 may be associated with a respective antenna characteristic map 400 for signaling gain (e.g., a gain metric), signaling noise (e.g., a noise metric), sidelobe characteristics (e.g., a sidelobe metric), or beam dimension (e.g., a beam rolloff metric, a beam width metric along an X" direction, a beam width metric along a Y" direction), or various combinations thereof (e.g., SNR, SINR).

An antenna characteristic map 400 may be associated with a particular operating condition, or may be scaled for a particular operating condition. For example, different antenna characteristic maps 400 may be defined for different operating frequencies or frequency ranges, different operating temperatures or temperature ranges, different operating voltages or voltage ranges, or other conditions, ranges of conditions, or combinations thereof. Additionally or alternatively, an antenna characteristic map 400, or antenna characteristic thereof, may be scaled according to an operating temperature, an operating frequency, an operating voltage, or other conditions or combinations of conditions. In some examples, some antenna characteristic maps 400 may be associated with or defined for signal transmission by a phased array antenna 155, while other (e.g., different) antenna characteristic maps 400 may be associated with or defined for signal reception by a phased array antenna 155. In some examples, multiple antenna characteristics may be combined to generate an effective antenna characteristic map 400, such as a map of a dimensionless or unitless antenna characteristic 410, such as a relative strength or effectiveness of various beam orientations 255, where different factors may be weighted by relative importance to signaling quality to generate such an effective antenna characteristic map 400.

In some examples, an antenna characteristic map 400 may be used to define a range or boundary of beam orientations 255 for a phased array antenna 155 to be used for communications signaling. For example, the antenna characteristic map 400 illustrates a scan volume boundary 420, which may correspond to an angular or other orientation boundary for antenna characteristics 410 that support a particular signaling quality. For illustrative purposes, in the example of antenna characteristic map 400, the scan volume within the scan volume boundary 420 may correspond to a range of beam orientations (e.g., angles α and β) over which gain of the phased array antenna 155 is at least -6 dB (e.g., a range over which attenuation is less than -6dB). However, a scan volume boundary 420 may correspond to other gain values, or other types of antenna characteristics 410 or combinations thereof, and may further be based on operating conditions or combinations thereof.

A communication system 100 may use one or more antenna characteristic maps 400 to improve various operations using a phased array antenna 155. For example, one or more antenna characteristic maps 400 may be used in conjunction with an evaluation of a local environment to determine a physical orientation 275 of the phased array antenna 155 (e.g., for a static or semi-static orienting or positioning operating, for a controlled or actuated orienting or positioning operation). Additionally or alternatively, one or more antenna characteristic maps 400 may be used to evaluate or perform various communications operations, such as evaluating when to attempt to establish a communications link with a target device, evaluating which of a set of target devices to attempt to establish a communications with, or evaluating which parameters to use when performing communications (e.g., an operating frequency, a modulation rate or scheme, a coding scheme, a beam width), among other operations.

In some example, an antenna characteristic map 400 may be used in the creation of a communications performance map, which may map communications characteristics local to an antenna assembly 151. For example, a phased array antenna 155 of an antenna assembly 151 may be used to receive signaling, transmit signaling, or both, and various evaluations of signaling quality may be scaled or normalized according to directional antenna characteristics 410 that may have impacted received or transmitted signaling. Thus, a contribution of a directional antenna characteristic 410 to an evaluation of a local signaling environment may be canceled or otherwise compensated for, such that a communications performance map may refer to intrinsic signaling characteristics of the environment. Additionally or alternatively, an antenna characteristic map 400 may be used in the interpretation of a communications performance map, which may support using a communications performance map generated according to one set of conditions (e.g., one or more first operating conditions, a first physical orientation 275) for evaluating communications performance in another set of conditions (e.g., different conditions, one or more second operating conditions, a second physical orientation 275).

**FIG.** 5 illustrates an example of a signaling map 500 that supports communication performance mapping for phased array antennas in accordance with examples as disclosed herein. The signaling map 500 illustrates an example for mapping directional signal quality metrics 510 determined from signals communicated via a phased array antenna 155 (e.g., signal reception by the phased array antenna 155, signal transmission by the phased array antenna), which may be associated with different beamformed beam orientations 255. The example of signaling map 500 illustrates a mapping with respect to angles α and β, in degrees, which may be angles relative to an array reference frame 280 as described with reference to FIG. 2. The origin 505 of the signaling map 500 may correspond to an orientation of a boresight 240, which may represent a nominal or principal physical orientation of the phased array antenna 155.

The signaling map 500, or signal quality metrics 510 thereof, may be generated according to various techniques. In some examples, the signaling map 500 may be based at least in part on receiving a plurality of signals (e.g., feed element signals 315, beam reception signals 335) at or via a phased array antenna 155 according to a plurality of beamformed beam orientations 255. Additionally or alternatively, in some examples, the signaling map 500 may be based at least in part on transmitting a plurality of signals (e.g., signals 365, signals 385) at or via a phased array antenna 155 according to a plurality of beamformed beam orientations 255. In various examples, such signals may be communicated using a frequency or frequency band that is used for communications via the phased array antenna 155, or such signals may be communicated using a frequency or frequency band that is not used for communications via the phased array antenna 155, or such signals may include combinations of signals from various frequencies or frequency bands that may or may not be used for communications via the phased array antenna 155. In some examples, the signaling map 500 may be associated with a first physical orientation 275, which may be different than a second physical orientation 275 used for subsequent communications.

Signals communicated at or via a phased array antenna 155 may be evaluated according to various techniques to generate the signal quality metrics 510 for respective beam orientations 255. In some examples, a signal quality metric 510 may include a signal strength (e.g., a signal power), a gain metric or an attenuation metric, a noise metric (e.g., a noise power), or various combinations thereof (e.g., SNR, SINR). In some examples, a signal quality metric 510 may be a binary characteristic, where a positive condition may indicate that signaling satisfies a threshold and a negative condition may indicate that signaling does not satisfy the threshold. In some examples, signal quality metrics 510 may be a composite of multiple measurements or evaluations, such as a dimensionless or unitless signal quality metric 510, where different factors may be weighted by relative importance to signaling quality to generate such a signal quality metric 510.

In examples where the signaling map 500 is based at least in part on receptions by a phased array antenna 155, at least some of the related signal evaluations may be performed at a user terminal 150. For example, a user terminal 150, or some component thereof (e.g., a user terminal controller 158), may measure characteristics of received signals and generate the signal quality metrics 510. In some examples, a user terminal 150 may communicate signal quality metrics 510, or supporting measurements, to another device (e.g., to a satellite 120, to an access node terminal 130, to a network device 141) to generate a signaling map 500. In examples where the signaling map 500 is based at least in part on transmissions by a phased array antenna 155, at least some of the related signal evaluations may be performed at a target device or other receiving device (e.g., a satellite 120, an access node terminal 130, a network device 141). For example, a satellite 120 may receive transmissions from a phased array antenna 155, and may measure characteristics of the received signals to generate the signal quality metrics 510. In some examples, a satellite 120 or other target device may relay communications to an access node terminal 130, and the access node terminal or an associated network device 141 may measure characteristics of the relayed signals to generate the signal quality metrics 510. In such examples, signal quality metrics 510 may be used by or communicated to any of an access node terminal 130 (e.g., an access node controller 135), a network device 141, a satellite 120, or a user terminal 150 (e.g., a user terminal controller 158) to generate a signaling map 500.

For illustrative purposes, the example of signaling map 500 is associated with a relative signal strength as a signal quality metric 510, which may be a comparative metric relative to a peak or maximum signal strength in a field of view of the phased array antenna 155. A beam orientation 255 at the origin 505 may be associated with a maximum or nominal measured signal strength, from which other measured signal strengths are compared (e.g., for mapping a relative strength or attenuation). As illustrated by the signaling map 500, a signal quality metric 510 (e.g., a relative signal strength) may generally degrade as the angle, β, increases (e.g., moving away from the origin 505 with increasing scan angle). For example, signal quality metric 510-a, at an orientation of α = 90 degrees and β = 45 degrees (e.g., a beam orientation 255), may be equal to -3dB, which may illustrate a degree of relative attenuation or reduced signal strength compared to a beam orientation 255 that is aligned with a boresight 240 (e.g., a signal quality metric at the origin 505).

In some examples, attenuation or roll-off of a signal quality metric 510 for a given beam orientation 255 may be based at least in part on an antenna characteristic 410 associated with the phased array antenna 155 for the given beam orientation 255. In such examples, an area of rolloff or attenuation of a signaling map 500 may be the same as or similar to an area of rolloff or attenuation of an antenna characteristic map 400. Additionally or alternatively, attenuation or roll-off of a signal quality metric 510 may be based on a local attenuation source, such as obstructions (e.g., buildings, trees, geological formations), path loss sources (e.g., distance between a transmitter and the phased array antenna 155, environmental or atmospheric signal attenuation, vegetation), or other attenuation or noise sources (e.g., ground-level scattering). In accordance with examples as disclosed herein, knowledge of signaling characteristics of phased array antenna 155 (e.g., an antenna characteristic map 400) may be used to compensate for or cancel out such effects (e.g., from a signaling map 500), which may support more-accurately evaluating or identifying intrinsic signaling characteristics of an environment local to a phased array antenna 155, such as obstructions, path loss sources, or other local phenomena that may affect signaling via a phased array antenna 155 (e.g., of a user terminal 150).

In some examples, signals received at or via a phased array antenna 155 for generating a signaling map 500 may be based at least in part on transmissions performed by one or more other devices of a communication system 100, such one or more satellites 120 or other target devices operable for performing communications via a phased array antenna 155 (e.g., a target device that supports a communications service with a user terminal 150). For example, a phased array antenna 155 may be operated according to one or more beams 250 (e.g., a receive beam 250) oriented in a manner that tracks a satellite 120 along an orbital path, and a signal quality metric 510 may be determined for each of a plurality of beam orientations 255 along the orbital path. Such techniques may be repeated for multiple passes of the same or different satellites 120 or other target devices along different orbital paths or other overhead traversals. Moreover, such techniques may or may not use signaling associated with a communications service (e.g., forward downlink signals 172, return uplink signals 173).

Signal quality metrics 510 of a signaling map 500 need not be limited only to locations (e.g., along orbital paths corresponding to beam orientations 255) that are associated with directional receptions or directional transmissions. For example, spatial filtering may be used between beam orientations 255 associated with various measurements and/or beam orientations 255 that are not associated with measurements. Spatial filtering may include interpolation between beam orientations associated with directional reception or directional transmission, and beam orientations 255 associated with a zero value (e.g., due to no data at those locations, due to a zero value for the particular signal quality metric 510). Various methods of interpolation may be applied, including linear interpolation, polynomial interpolation, exponential interpolation, and the like. A spatial filter may have filter parameters and/or coefficients that are different between directions along an orbital path and directions perpendicular to an orbital path.

In some examples, signals received at or via a phased array antenna 155 for generating a signaling map 500 may be based at least in part on transmissions performed by the same phased array antenna 155 (e.g., in a radar imaging technique). For example, a phased array antenna 155 may be configured to transmit signals (e.g., signals 365, signals 385), and the phased array antenna 155 may be configured to scan for reflections of the transmitted signals (e.g., received as feed element signals 315 or beam reception signals 335). By scanning for reflections of the signals transmitted by the phased array antenna 155, various aspects of a local communications environment may be evaluated, such as orientations or locations (e.g., orientations and associated distances) corresponding to obstructions or blockages. Such techniques may be performed without involving a separate transmitting or receiving device for generating a signaling map 500, or may be combined with one or more aspects of signaling between a phased array antenna 155 and another device, among other techniques.

Aspects of signaling in a radar imaging technique may be configured for various beneficial attributes. In some examples, transmitted signals may be configured over a same frequency or frequency band as a communications frequency or frequency band, so that any effect of frequency-dependent attenuation or blockage can be captured in a manner that is relevant to communications performed via the phased array antenna 155. Additionally or alternatively, in some examples, transmitted signals may be configured to avoid a frequency or frequency band that would be used for communications, which may support robustness of the relevant techniques when the phased array antenna 155 may be located near an interfering transmitter (e.g., using a same communications frequency band), or where transmissions from a target device (e.g., a satellite 120) may interfere with performing the radar imaging techniques. In some examples, a radar imaging technique may leverage directional transmissions (e.g., transmissions of a beam 250, along a beam orientation 255), which may or may not be accompanied by directional reception along a same beam orientation 255. In some examples, a radar imaging technique may leverage non-directional or coherent transmissions (e.g., transmissions of signals 385 that are aligned in phase). In some examples, transmissions, receptions, or both in a radar imaging technique may be compensated for based on (e.g., normalized relative to) antenna characteristics 410 associated with the respective signaling, such as scaling transmission power according to beam orientations 255, scaling reception power according to beam orientations 255, or both.

In some examples, signals received at or via a phased array antenna 155 for generating a signaling map 500 may not be associated with a transmitting device. For example, a phased array antenna 155 may be configured to scan for ambient signals (e.g., background emissions) local to the phased array antenna 155. Ambient signals may be based on temperatures or other thermal effect (e.g., molecular action) of various physical bodies within a field of view of the phased array antenna 155, which may support distinguishing between physical bodies (e.g., obstructions) and a lack thereof (e.g., an unobstructed line of sight, a clear sky view). In some examples, reception of ambient signals for the generation of a signaling map 500 may be scheduled according to a time of day. For example, a night sky may be advantageous for some evaluations of ambient signals, due to relatively low sky temperatures (e.g., in the range of 60 Kelvin), and such conditions may beneficially support distinguishing obstructions such as trees and buildings from clear sky (e.g., when a lower-temperature sky may be associated with lower electromagnetic emissions). In some examples, an ambient signal scanning technique that supports generating a signaling map 500 may be configured to avoid a frequency or frequency band that would be used for communications, to avoid evaluating signals that may have originated from a transmitting device and accordingly may not be related to signal attenuation or a blockage source of an environment local to the phased array antenna 155.

In various examples, aspects of generating a signaling map 500 (e.g., communicating signals via a phased array antenna 155) may be performed during normal operations, or may be performed in a diagnostic or other mode that is not otherwise associated with supporting communications via the phased array antenna 155. For example, in some cases, a signaling map 500 may be generated based at least in part on signaling communicated with a target device under normal operating conditions (e.g., based at least in part on communications signaling, such as forward downlink signals 172 or return uplink signals 173 of a communications service). In some examples, such as when a phased array antenna 155 is used for tracking one or more non-stationary target devices (e.g., when tracking a non-geosynchronous satellite 120, such as a LEO satellite or MEO satellite, when tracking overhead planes or UAVs, when performing communication handover between various target devices), or when a phased array antenna 155 is physically moved (e.g., moved from one location to another, moved from one physical orientation 275 to another, implemented in a vehicle application), information about a signaling environment sufficient for generating a signaling map 500 (e.g., a quantity of signal quality metrics 510 across a substantial portion of the field of view of the phased array antenna 155) may be collected during normal communications operations. Additionally or alternatively, signaling that supports generating a signaling map 500 may be communicated in accordance with a beam scanning operation, which may be initiated or performed based on a periodic interval, or on an event trigger, among other criteria or conditions (e.g., between normal operations). For example, a phased array antenna 155 may be configured to periodically scan along beam orientations 255 around a local environment to detect local blockages. The scanning may, for example, leverage a radar imaging technique (e.g., where the phased array antenna 155 transmits signals and supports measuring backscatter), an ambient signal scanning technique (e.g., scanning for differences in background emissions, measuring noise temperature to identify clear sky), or both. In some examples, the scanning of beam orientations 255 may include "spoiling" a beam 250 to make a wider beam 250 (e.g., to change a shape or size of the beam 250) for initially scanning the environment for blockages or other attenuation, and then narrowing the beam 250 and scanning around the identified blockages to accurately determine the edges of the blockages. Such a scanning approach may support a local environment being scanned relatively quickly for generating a signaling map 500.

FIG. 6 illustrates an example 600 of generating a communications performance map 620 that supports communication performance mapping for phased array antennas in accordance with examples as disclosed herein. The example 600 includes a generation operation 610 that generates a communications performance map 620 based on a signaling map 500-a (e.g., based on signals received by or transmitted by a phased array antenna 155 according to a plurality of beam orientations 255) and an antenna characteristic map 400-a (e.g., directional antenna characteristics associated with the plurality of beamformed beam orientations). The communications performance map 620 illustrates an example for mapping scaled signal quality metrics 625 determined from signal quality metrics 510 (e.g., of the signaling map 500-a) and antenna characteristics 410 (e.g., of the antenna characteristic map 400-a), which may be associated with different beamformed beam orientations 255. The communications performance map 620 may be illustrative of a communications environment local to an antenna assembly 151 that includes a phased array antenna 155.

Example 600 illustrates a simplified generation operation 610, where the communications performance map 620 may be generated as a difference between (e.g., a subtraction between, a scaling between, a product or multiplication of) the signaling map 500-a and the antenna characteristic map 400-a, which may each be associated with a common physical orientation 275. For example, where the signaling map 500-a provides a relative signal strength of signaling performed via a phased array antenna 155 (e.g., based on measurements of signals received at or transmitted by the phased array antenna 155), and the antenna characteristic map 400-a provides a relative gain of the phased array antenna 155 (e.g., for transmissions or receptions by the phased array antenna 155, based on physical characteristics of the phased array antenna 155 that are directional relative to a boresight 240), the generation operation 610 may include scaling (e.g., for each of the beam orientations 255) the signal quality metrics 510 of the signaling map 500-a based on the antenna characteristics 410 of the antenna characteristic map 400-a, or otherwise compensating for the antenna characteristics 410. Accordingly, the communications performance map 620 may include information about the attenuation environment local to the phased array antenna 155, where characteristics (e.g., signaling characteristics, beamforming characteristics, directional characteristics) of the phased array antenna 155 may be removed or otherwise compensated for (e.g., compared to the signaling map 500). For example, a scaled signal quality metric 625-a may indicate a beam orientation 255 that is not associated with a local attenuation (e.g., where an attenuation reflected in the signal quality metric 510-a is the same as, or equivalent to, an attenuation reflected in the antenna characteristic 410-a).

A communications performance map 620 may be divided into or otherwise illustrate different regions pertaining to communications performance for a phased array antenna 155 in the local environment. For example, the communications performance map 620 may include an obstructed region 630, which illustrates a region of high attenuation or signal blockage that is not attributed to directional attenuation of the phased array antenna 155 itself. Thus, the generation operation 610 may identify an obstruction 635, which may be assigned to a range of beam orientations 255 of an array reference frame 280, or may be assigned to orientations or locations in a base reference frame 270 or a global reference frame 260 (e.g., relative to a position of the phased array antenna 155, not shown). Accordingly, the generation operation 610 may be an example of determining a blockage map associated with a location of the phased array antenna 155 based on the signaling map 500-a and the antenna characteristic map.

In some examples, the communications performance map 620 may include a restricted region 640, which may correspond to beam orientations 255 that are not suitable for communications using the phased array antenna 155, and an available region 650, which may correspond to beam orientations 255 that are suitable for communications using the phased array antenna 155. An available region 650 may correspond to beam orientations 255 where performance of the phased array antenna 155 in the local environment satisfies a threshold (e.g., meets or exceeds a threshold gain, SNR, SINR), such as where a field of view is not obstructed, or where a combination of local path loss and antenna scan loss (e.g., at a given physical orientation 275, which may or may not be the same physical orientation 275 associated with an antenna characteristic map 400 and a signaling map 500 used to generate a communications performance map 620) does not prevent communications. For example, the communications performance map 620 may reflect a scan volume boundary 420-a of a phased array antenna 155 that is at least partially obstructed by the obstruction 635, such that the available region 650 illustrates an available portion of a scan volume of the phased array antenna 155. Accordingly, a boundary 655 may illustrate an example of a boundary of beam orientations 255 for communications using the phased array antenna 155, which may be a combination of a boundary associated with the phased array antenna 155 (e.g., associated with antenna characteristics 410, in regions of the signaling map 500 that are not associated with a path loss) and a boundary of an obstructed region 630.

Although the simplified example of generation operation 610 is described with reference to an obstruction 635 preventing use of an entire scan volume, in some examples, a boundary 655 may be within a scan volume boundary 420 due to other sources of path loss, including environmental or atmospheric attenuation, or distance-based attenuation at certain beam orientations 255. Further, in some examples, a communications performance map 620 may omit antenna characteristics 410 from the determination of a restricted region 640, such that a boundary 655 is based solely on an inference of local path loss sources and obstructions, among other sources of attenuation that are not related to the performance of the phased array antenna 155 itself. In such examples, a boundary between an available region 650 and a restricted region 640, or a restricted region 640 and an available region 650 themselves, may be determined based on a communications performance map 620 and another antenna characteristic map 400 (e.g., a scan volume) that is based on particular operating conditions of interest (e.g., according to a frequency to be used for communications, according to a present operating temperature or voltage that may be different than when generating a communications performance map 620). Additionally or alternatively, a boundary between an available region 650 and a restricted region 640, or a restricted region 640 and an available region 650 themselves, among other aspects of a communications performance map 620, may be determined or evaluated based on an antenna characteristic map 400 that is associated with a new physical orientation 275 (e.g., a second physical orientation 275, a physical orientation associated with evaluating conditions for performing communications) which may be evaluated before or after a reorientation from one physical orientation 275 to another, or may be used to determine a new physical orientation 275 for a phased array antenna 155.

The generation operation 610, or portions thereof, may be performed by various components of a communication system 100 (e.g., by one or more components that operate as a local environment manager). In some examples, the generation operation 610 may be performed at a user terminal 150 (e.g., a user terminal controller 158), and the communications performance map 620 may be used for various operations at the user terminal, or the user terminal 150 may transmit the communications performance map 620 to another device (e.g., an access node terminal 130, a network device 141, a service or installation device coupled with the user terminal 150), or various combinations thereof. In some examples, a signaling map 500 may be determined at a user terminal 150, or at an antenna assembly 151, and transmitted to another device (e.g., an access node terminal 130, a network device 141, a service or installation device coupled with the user terminal 150 or antenna assembly 151) for performing the generation operation 610.

In some examples, a generation operation 610, or other supporting operation, may further account for characteristics of a second antenna, such as a second antenna involved in determining a signaling map 500. For example, to generate a communications performance map 620, a generation operation 610 may include a compensation based on an antenna characteristic map 400 at a receiving phased array antenna 155 (e.g., of an antenna assembly 151 at a user terminal 150), as well as a compensation for characteristics of a transmitting antenna (e.g., an antenna of a satellite 120 or other target device, an antenna assembly 121, a transmitting phased array antenna 155, a compensation using a second antenna characteristic map 400). For example, according to various techniques, a communications performance map 620 based on signals received at a phased array antenna 155 may include a compensation for gain or SNR of a transmitting satellite 120, or otherwise account for scan characteristics of a transmitting antenna assembly 121 (e.g., scan loss, range). In some examples, such a compensation may have already been performed in the generation of a signaling map 500, rather than during the generation operation 610, but may nonetheless be accounted for in a communications performance map 620.

In some examples, a generation operation 610 may include generating a communications performance map 620 using multiple signaling maps 500 (e.g., a combination of one or more of a radar imaging mapping, a thermal or ambient signal mapping, a known transmitter mapping). In some examples, each mapping (e.g., each signaling map 500) may be scaled or weighted for combination with the other mappings, such as scaling or weighting on confidence, strength of pattern recognition, resolution of data, amount of data, frequency or frequency range, or other relevance to the operation of the phased array antenna 155 (e.g., for supporting a communications service). In some examples, such techniques may include an assumed or predicted communications performance map 620 (e.g., as an initial condition, as a baseline condition), such as an estimated field of view from satellite imagery.

In some examples, a generation operation 610 may include signaling maps 500 generated according to multiple orientations of a phased array antenna 155 (e.g., different physical orientations 275, different orientations of a boresight 240), or communications performance maps 620 associated with different orientations of a phased array antenna 155 may be otherwise combined. For example, a first communications performance map 620 may be generated in an array reference frame 280 associated with a first boresight orientation (e.g., a first physical orientation 275), and converted (e.g., according to a coordinate system or reference frame transformation) to a corresponding first communications performance map 620 in a base reference frame 270 or a global reference frame 260, and a second communications performance map 620 may be generated in an array reference frame 280 associated with a second boresight orientation (e.g., a second physical orientation 275), and converted to a corresponding second communications performance map 620 in a base reference frame 270 or a global reference frame 260. The first and second communications performance maps 620 may be combined, which may include various averaging or weighted averaging techniques. Thus, a communications performance map 620 need not be limited to beam orientations 255 of an array reference frame 280, but may be relevant to any beam orientations 255 that may be supported by a phased array antenna 155 according to various physical positioning, various electronic beamforming, or various combinations of physical positioning and electronic beamforming.

A generation operation 610 or a communications performance map 620, may be used to infer various aspects of a blockage or attenuation environment local to a phased array antenna. In some examples, such operations may be performed during normal operation of a phased array antenna 155, such as using machine learning to infer the surroundings from the measured signal quality data of signals communicated with satellites 120 during normal operation (e.g., forward downlink signals 172, return uplink signals 173). In some examples, machine learning or artificial intelligence techniques may be leveraged to characterize various aspects of a communications performance map 620. For example, a generation operation 610 or a communications performance map 620 may identify a null in a particular direction (e.g., a beam orientation 255, a direction or location in an array reference frame 280, a base reference frame 270, or a global reference frame), which may be inferred as an emitter or emitting device. In some examples, an interferer may be identified based on receiving signaling over a communications frequency or frequency band along a beam orientation 255 that is not associated with a known transmitter. In various examples, a direction or location of an emitter or interferer may be avoided for communications, avoided for signaling using a certain frequency of frequency band (e.g., one or more frequencies associated with or attributed to the emitter), or avoided entirely. In some examples, techniques such as pattern recognition may be applied to distinguish between buildings and trees or other vegetation, such as characterizing a degree of attenuation or blockage along certain beam orientations 255, or identifying a degree of reflectivity or scatter along certain beam orientations 255, among other techniques. In some examples, characteristics associated with vegetation may be adjusted for seasonal effects, such as maintaining different communications performance maps 620 over durations where vegetation may be leafed (e.g., summer months) and durations where vegetation may be bare (e.g., winter months), or otherwise initiating adjustments to a communications performance map 620 in response to such changes.

Thus, in accordance with examples as disclosed herein, a local environment manager (e.g., of a user terminal controller 158, of an access node controller 135) may use an antenna performance profile (e.g., one or more antenna characteristic maps 400) to adjust or normalize measured signal quality data (e.g., one or more signaling maps 500). In doing so, the location (e.g., beam orientation 255, orientation or position in an array reference frame 280, a base reference frame 270, or a global reference frame 260) and severity of local attenuation or obstructions 635 can be more accurately determined, thereby supporting improved utilization of or communication via a phased array antenna 155. For example, directional antenna characteristics that affect signaling used to evaluate a local environment may be canceled out of a local communications performance map 620, and then different antenna characteristics 410 related to an operating condition (e.g., a frequency used for communication) may be used for performing or evaluating various operations with the phased array antenna 155.

FIG. 7 illustrates an example 700 of using communication performance mapping for communications operations using phased array antennas in accordance with examples as disclosed herein. The example 700 is described with reference to a communications performance map 620-a, which may include an obstructed region 630-a, a restricted region 640-a, and an available region 650-a. In some examples, one or more of the described techniques may be illustrative of operations for communicating with a satellite 120 or other target device based at least in part on the communications performance map 620-a, and may include operations performed at a user terminal 150, another network entity (e.g., a scheduling entity, an access node terminal 130, a network device 141), or combinations thereof. For example, a user terminal 150 may generate the communications performance map 620-a and perform various operations using the communications performance map 620-a itself, or a user terminal 150 may transmit the communications performance map 620-a to a network scheduling entity and receive commands based on the transmitted communications performance map 620-a, or both. In some examples, the communications performance map 620-a may be illustrative of beam orientations 255 in an array reference frame 280 (e.g., at a physical orientation 275, which may or may not be the same physical orientation 275 used to receive signaling to support generation of the communications performance map 620-a). However, the described techniques are also applicable to a base reference frame 270 or a global reference frame 260, which may involve one or more transformations between one reference frame and another.

In various examples, the communications performance map 620-a, or operations using the communications performance map 620-a, may consider an operating condition for performing communications using a phased array antenna 155, as well as an operating condition associated with transmitting or receiving signaling of a signaling map 500. For example, the communications performance map 620-a may have been generated based on conditions different than those for performing communications, such that generating the communications performance map 620-a may be associated with a first antenna characteristic map 400, and performing communications may be associated with (e.g., based at least in part on, performed in consideration of) a second antenna characteristic map 400 that is different than the first. Additionally or alternatively, the communications performance map 620-a may have been generated based on a physical orientation 275 that is different than a physical orientation 275 for performing or evaluating communications, such that generating the communications performance map 620-a may be associated with an antenna characteristic map 400 at a first physical orientation 275, and performing or evaluating communications using the communications performance map 620-a may be associated with (e.g., based at least in part on, performed in consideration of) a second antenna characteristic map 400 at a second physical orientation 275 that is different than the first. Or, in some examples, the communications performance map 620-a itself may be associated with a second physical orientation 275, and may be based at least in part on an antenna characteristic map 400 at the second physical orientation 275 as well as one or more antenna characteristic maps 400 associated with one or more first physical orientations 275 (e.g., for which signaling was communicated and evaluated for a respective signaling map 500). In various examples, an evaluation for performing communications at a second physical orientation 275 (e.g., an evaluation based at least on an antenna characteristic map 400 at the second physical orientation 275) may be performed before, after, or without actually positioning a phased array antenna 155 at the second physical orientation 275.

Thus, in various examples, the communications performance map 620-a may or may not include compensation for current operating conditions (e.g., not including compensation for a second antenna characteristic map 400), and may thus be related to intrinsic attenuation environment local to the phased array antenna 155. Accordingly, operations using the communications performance map 620-a may further include applying a compensation or scaling for antenna characteristics 410 at a current operating condition (e.g., by a user terminal 150, by a scheduling entity, using a second antenna characteristic map 400), such as a physical orientation 275, an operating temperature, an operating frequency, or an operating voltage, or other condition or combination of conditions. In some examples, the communications performance map 620-a may have been generated by compensating signal quality metrics 510 for the first antenna characteristic map 400 and then applying a second antenna characteristic map 400 (e.g., to generate a communications performance map 620 that has been adjusted to current conditions of the phased array antenna 155 for performing communications).

In some examples, the communications performance map 620-a may be used to evaluate when a target device (e.g., a satellite 120) is within a range of beam orientations 255 that support communications with the phased array antenna 155. For example, a user terminal 150 or other scheduling entity may have knowledge of locations of one or more target devices, or may be able to track a target device through certain orientations regardless of whether communications are supported at those locations, and may select a particular target device (e.g., the satellite 120-a or the satellite 120-b) for communications while it is positioned within the available region 650-a. In some examples, a user terminal 150 may select one of the satellite 120-a or the satellite 120-b that is within the available region 650-a, and attempt to establish a communications link with the selected satellite. In some examples, a scheduling entity may make such a selection, and may send a command to one or both of a user terminal 150 or the selected satellite 120 to establish a communications link.

In some examples, the communications performance map 620-a may be used to select one of a set of available target devices for performing communications, such as evaluating which of a set of target devices is in a position that is favorable for communications with a phased array antenna 155. For example, using the communications performance map 620-a, a user terminal 150 or other scheduling entity may determine that the satellite 120-b is closer to a boresight orientation of the phased array antenna 155 than the satellite 120-a and, accordingly, may select the satellite 120-b for performing communications (e.g., based at least in part on a relatively lower scan loss for a phased array antenna 155). Although the communications performance map 620-a is illustrated as being divided into different regions according to a boundary, the communications performance map 620-a may, within a region or more generally, include information at finer granularity regarding a local attenuation environment, or a combination of a local attenuation environment and current antenna characteristics 410 (e.g., at operating conditions for performing communications), such that relative performance characteristics of different beam orientations 255 may be compared for such evaluations (e.g., selecting a target device that is located at a position with a relatively low combination of path loss and scan loss).

In some examples, the communications performance map 620-a may be used to evaluate when to establish or break a communications link with a target device. For example, a user terminal 150 or other scheduling entity may have knowledge of a path of a target device, or may be able to track a target device along certain paths regardless of whether communications are supported at those locations, and may be able to predict when the target device will meet or cross the boundary 655-a, or travel into or out of regions with relatively favorable signaling characteristics using a phased array antenna 155. Thus, a user terminal 150, or a scheduling entity, or both may make communications scheduling determinations based at least in part on such predictions. In some examples, these and other techniques may be used for evaluating when the user terminal 150 should hand off from one target device to another, such as scheduling a handoff to from one satellite to another (e.g., from the satellite 120-a to the satellite 120-b or vice-versa) based at least in part on the generated communications performance map 620-a.

In some examples, the communications performance map 620-a may be used to evaluate which parameters should be used when performing communications. For example, based on signaling characteristics represented by the communications performance map 620-a, a user terminal 150, a scheduling entity, or both may determine an operating frequency or frequency range, a modulation rate or scheme, a coding scheme, or a beam width, among other parameters or combinations thereof for performing communications. In some examples, certain regions of the communications performance map 620-a may be suitable for some communications (e.g., lower bandwidth communications, communications for establishing a communications link), but not for certain communications (e.g., higher bandwidth communications). Thus, by leveraging knowledge of the characteristics of a phased array antenna 155, the system may perform some communications, such as preemptively establishing a communication link, using signaling that may be relatively heavily attenuated (e.g., due to path loss, scan loss, or a combination thereof) before a target device moves in to a region that may support other communications, such as higher-bandwidth communications. In some examples, the communications performance map 620-a, or a combination of communications performance maps 620, may indicate that, for a given beam orientation 255, communications of one frequency may be more heavily attenuated than communications of another frequency, which may be considered in the selection of a frequency for performing communications.

Thus, in accordance with these and other examples, various components of a communication system 100 may be configured to use the communications performance map 620-a in the operation of a phased array antenna 155, which may include various operations that consider directional characteristics of the phased array antenna 155. By considering such directional characteristics, various components of the communication system 100 may support improved communications performance, improved utilization of communications resources (e.g., improved spectral efficiency), smoother handover between target devices, or reduced occurrences of communication dropout, among other benefits, compared to techniques that do not consider directional characteristics of a phased array antenna 155.

**FIG. 8** illustrates an example 800 of using communication performance mapping for positioning phased array antennas in accordance with examples as disclosed herein. The example 800 may be described with reference to a first communications performance map 620-b (e.g., at a first physical orientation 275), which may include first instances of an obstructed region 630, a restricted region 640, and an available region 650 (e.g., relative to a first orientation of a boresight 240, relative to a first physical orientation 275), and a second communications performance map 620-c (e.g., at a second physical orientation 275), following a positioning operation 810, which may include second instances of an obstructed region 630, a restricted region 640, and an available region 650 (e.g., relative to a second orientation of the boresight 240, relative to a second physical orientation 275).

One or more of the described techniques may be illustrative of operations for positioning a phased array antenna 155 based at least in part on the communications performance map 620-b, and may include operations performed at a user terminal 150 (e.g., operations of a user terminal controller 158, operations of a positioner 235), another network entity (e.g., a scheduling entity, an access node terminal 130, a network device 141), or combinations thereof. For example, a user terminal 150 may perform various operations for repositioning a phased array antenna 155, or a user terminal 150 may transmit the communications performance map 620-b to a network scheduling entity and receive commands (e.g., repositioning commands or indications, actuation commands) based on the transmitted communications performance map 620-b, or both. In some examples, the communications performance maps 620-b and 620-c may be illustrative of beam orientations 255 in an array reference frame 280. However, the described techniques are also applicable to a base reference frame 270 or a global reference frame 260, which may involve one or more transformations between one reference frame and another.

In various examples, the communications performance map 620-b, or operations using the communications performance map 620-b, may consider an operating condition for performing communications using a phased array antenna 155, as well as an operating condition associated with transmitting or receiving signaling of a signaling map 500. For example, the communications performance map 620-b may have been generated based on conditions different than those for performing communications, such that generating the communications performance map 620-b may be associated with a first antenna characteristic map 400, and performing communications may be associated with a second antenna characteristic map 400 that is different than the first. Thus, in some examples, the communications performance map 620-b may not include compensation for current operating conditions (e.g., not including compensation for a second antenna characteristic map 400), and may thus be related to intrinsic attenuation environment local to the phased array antenna 155. Accordingly, operations using the communications performance map 620-b may further include applying a compensation or scaling for antenna characteristics 410 at a current operating condition (e.g., by a user terminal 150, by a scheduling entity, using a second antenna characteristic map 400), such as a current physical orientation 275, an operating temperature, an operating frequency, or an operating voltage, or other condition or combination of conditions. In some examples, the communications performance map 620-b may have been generated by compensating signal quality metrics 510 for the first antenna characteristic map 400 and then applying a second antenna characteristic map 400 (e.g., to generate a communications performance map 620 that has been adjusted to current conditions of the phased array antenna 155 for performing communications).

The communications performance may 620-b may be used according to various techniques to perform a positioning operation 810 for a phased array antenna 155, such as various evaluations for determining how or when to position the phased array antenna 155, which may include operations for static or semi-static orienting or positioning, for controlled or actuated orienting or positioning operation, or various combinations thereof. In the example of positioning operation 810, the phased array antenna 155 may be repositioned to move the scan volume boundary 420-c away from the obstruction 635-b, which may include moving the boresight 240 towards a direction of α = 45 degrees. In some examples, such a reorientation may include a combination of an elevation repositioning and an azimuth repositioning (e.g., of a coupling or an actuator of a positioner 235), or some other reorientation of a positioner 235. In the example of positioning operation 810, the phased array antenna 155 may also be rotated to align an edge of the scan volume boundary 420-c relative to an edge of the obstruction 635-b, which may include rotating the phased array antenna 155 about a Z" axis (e.g., about the boresight 240). In some examples, such a reorientation may include a skew rotation (e.g., of a coupling or an actuator of a positioner 235), such that the obstruction 635-b is rotated with respect to an array reference frame 280 associated with the communications performance map 620-c.

In some examples, an iterative installation process may be performed for static or semi-static positioning of one or more positioning operations 810. For example, a boresight 240 of a phased array antenna 155 may be aligned along a first orientation (e.g., a first physical orientation 275, an orientation by an installer), which may be followed by a scan of an environment local to the phased array antenna 155 that is aligned along the first orientation (e.g., to generate a first signaling map 500). A local environment manager (e.g., of a user terminal controller 158, of an installation device or CPE 160 coupled with the user terminal 150, a network entity such as an access node terminal 130 or network device 141) may subsequently determine the communications performance map 620-b (e.g., based on the scan of the local environment), which may include identifying the obstruction 635-b, among other attenuation sources. The local environment manager determine a new orientation for the phased array antenna 155 (e.g., a new orientation for a boresight 240, a new physical orientation 275) based at least in part on the communications performance map 620-b, or otherwise determine that the phased array antenna 155 is to be repositioned, which, in some examples, may consider an antenna characteristic map 400 as applied to or otherwise associated with one or more candidate positions (e.g., one or more candidate physical orientations 275, prior to the positioning operation 810). In some examples, a new orientation for the phased array antenna 155 may be communicated to an installer (e.g., via a CPE 160), which may include or be part of an indication for a user (e.g., the installer) to reposition the phased array antenna 155 from the first orientation to a second orientation. In one example of a positioning operation 810, an installer may move or orient the phased array antenna 155 about one or more couplings of a positioner 235 (e.g., in accordance with a new physical orientation 275 determined based on the communications performance map 620-b), which may include fixing or immobilizing one or more of the couplings when a desired orientation of the phased array antenna 155 is reached. In some examples, multiple iterations of such an approach may be performed.

Additionally or alternatively, in some examples, a positioning operation 810 may be performed at least in part by using an actuator of a positioner 235 that is responsive to an actuation command. For example, a local environment manager (e.g., of a user terminal controller 158, of an installation device or CPE 160 coupled with the user terminal 150, of a network entity such as an access node terminal 130 or network device 141) may determine a new physical orientation for the phased array antenna 155 (e.g., a new orientation for a boresight 240) based at least in part on the communications performance map 620-b, and command an actuator of a positioner 235 to reposition the phased array antenna 155 to a new physical orientation 275. In some examples, such techniques may be performed periodically (e.g., according to a period of days, weeks, months), or triggered based at least in part on a communications condition (e.g., a degraded communications link, a change in target device), such as when an actuator of a positioner 235 is not used for continuously tracking a target device.

A communication system 100 may implement various techniques for determining a desired or commanded physical orientation 275 for a phased array antenna 155. In some examples, a desired or commanded orientation may be selected in a manner that maximizes the unobstructed field of the view within the scan volume of the antenna (e.g., in steradian), which may be an example of aligning a scan volume of the phased array antenna 155 relative to an unobstructed field of view of a blockage map. Additionally or alternatively, a desired or commanded orientation may consider link conditions of satellites crossing within the field of view due to factors such as the slat range and antenna performance with scan angle. Additionally or alternatively, a desired or commanded orientation may be selected based at least in part on avoiding noise sources (e.g., known emitters or interferers), avoiding physical obstructions (e.g., avoiding the obstruction 635-b, aligning a boresight 240 with an unobstructed portion of a blockage map), considering cooperative or non-cooperative emitters, among other considerations or combinations of considerations.

In some examples, a desired or commanded orientation of a boresight 240 may be based at least in part on a direction of probable target device locations (e.g., determining a physical orientation 275 based at least in part on a probability distribution of locations for target satellites 120). For example, some LEO satellites 120 may be configured for orbital paths that are within or bounded by a +/-45 degree latitude, and such satellites 120 may cluster around such an inclination angle. Thus, a desired or commanded orientation of a boresight 240 may be selected as a combination of maximizing an unobstructed field of view while also weighting towards an orientation associated with greater density of satellites 120 (e.g., pointed to or towards a 45-degree latitude). Additionally or alternatively, a desired or commanded orientation may be determined based on an alignment of a geometric feature of the phased array antenna 155 (e.g., a direction of elongation of a scan volume, a direction of greater or lesser dimension or width of a beam 250, a major or minor axis of a scan volume) along an orbital path, or perpendicular to an orbital path, or along an edge of an obstruction 635 or other attenuation features, among other alignments.

By considering directional characteristics of a phased array antenna 155 (e.g., the communications performance map 620-b) for performing positioning operations 810, the phased array antenna 155 may be aligned with an orientation that improves utilization of a scan volume of the phased array antenna 155, or the phased array antenna 155 may be used with fewer or less expensive actuators (e.g., actuators that may not be used for smoothly or continuously tracking target devices), among other benefits, compared to positioning techniques that do not consider directional characteristics of the phased array antenna 155.

FIG. 9 shows a block diagram 900 of a communication system 920 that supports communication performance mapping for phased array antennas in accordance with aspects of the present disclosure. The communication system 920 may be an example of one or more aspects of a communication system 100 as described with reference to FIGs. 1 through 8. In some examples, the communication system 920 may refer to one or more components of a user terminal 150. In some examples, one or more components of the communication system 920 may be separate from a user terminal 150, and may refer to one or more components of an access node terminal 130 (e.g., an access node controller 135), of a network device 141, or combinations thereof.

The communication system 920, or various components thereof, may be an example of means for performing various aspects of communication performance mapping and installation for phased array antennas as described herein. For example, the communication system 920 may include a signal receiver 925, an antenna characteristic manager 930, a performance mapping component 935, a communications manager 940, an antenna positioner 945, a signal quality evaluation component 950, a signal quality scaling component 955, a signal transmitter 960, a repositioning indicator 965, a positioning actuator 970, or any combination thereof. Each of these components may communicate, directly or indirectly, with one another (e.g., via one or more buses).

The signal receiver 925 may refer to one or more components configured for receiving signals via a phased array antenna 155 (e.g., of the communication system 920). In some examples, the signal receiver 925 may include the phased array antenna 155, which may include a plurality of feed elements 156, or a plurality of transducers configured to convert electromagnetic radiation into electrical signals (e.g., feed element signals), or both. In some examples, the signal receiver 925 may include an analog or digital beamformer (e.g., a receive beamforming network 310) configured to convert received feed element signals into a beam signal (e.g., according to phase transformation, amplitude transformation, or various combinations thereof), a demodulator configured to demodulate analog signals into digital signals, among other components or combinations thereof. In some examples, the signal receiver 925 may refer to a component outside a user terminal 150 that is otherwise configured to receive signals communicated via a phased array antenna 155.

The antenna characteristic manager 930 may refer to one or more components configured for managing characteristics (e.g., communications characteristics, signaling characteristics) of a phased array antenna 155, such as gain characteristics, noise characteristics, or beamwidth characteristics, among other characteristics of the phased array antenna 155. In some examples, such characteristics may be based at least in part on (e.g., depend on, be defined according to) beam direction, frequency, temperature, among other characteristics or combinations thereof. The antenna characteristic manager 930 may include or refer to memory of the communication system 920 configured to store such characteristics, or a component configured to receive such characteristics from elsewhere (e.g., from a network device 141, based on a request or poll), which may be a component of a user terminal 150 or a component separate from a user terminal 150.

The signal transmitter 960 may refer to one or more components configured for transmitting signals via a phased array antenna 155 (e.g., of the communication system 920). In some examples, the signal transmitter 960 may include the phased array antenna 155, which may include a plurality of feed elements 156, or a plurality of transducers configured to convert electromagnetic radiation into electrical signals (e.g., feed element signals), or both, which may or may not be common with the respective components of the signal receiver 925. In some examples, the signal transmitter 960 may include an analog or digital beamformer (e.g., a transmit beamforming network 360) configured to convert received feed element signals into a received spot beam signal (e.g., according to phase transformation, amplitude transformation, or various combinations thereof as applied to respective feed element signals), a demodulator configured to demodulate analog signals into digital signals, among other components or combinations thereof, which may or may not be common with the respective components of the signal receiver 925.

The communication system 920 may support one or more techniques for communication performance mapping for phased array antennas in accordance with examples as disclosed herein. For example, the signal receiver 925 may be configured as or otherwise support a means for receiving a plurality of signals (e.g., feed element signals 315, beam reception signals 335) at or via a phased array antenna, which may include receiving or beamforming according to a plurality of beamformed beam orientations of the phased array antenna. The antenna characteristic manager 930 may be configured as or otherwise support a means for determining a plurality of directional antenna characteristics associated with the plurality of beamformed beam orientations. The performance mapping component 935 may be configured as or otherwise support a means for generating a communications performance map (e.g., a spatial map, a directional map) based at least in part on the plurality of signals received by the signal receiver 925 and the plurality of directional antenna characteristics determined by the antenna characteristic manager 930. The communications manager 940 may be configured as or otherwise support a means for communicating (e.g., transmitting, receiving) with a satellite or other target device based at least in part on the communications performance map generated by the performance mapping component 935.

In some examples, to support determining the plurality of directional antenna characteristics, the antenna characteristic manager 930 may be configured as or otherwise support a means for determining, for each beamformed beam orientation of the plurality, an antenna gain, an antenna noise metric, or a beamwidth, or any combination thereof, associated with electronic beamforming along the beamformed beam orientations.

In some examples, to support generating the communications performance map, the signal quality evaluation component 950 may be configured as or otherwise support a means for determining, for each received signal of the plurality, a respective signal quality metric (e.g., signal strength, SNR, SINR) for the received signal. In some examples, to support generating the communications performance map, the signal quality scaling component 955 may be configured as or otherwise support a means for scaling, for each received signal of the plurality, the respective signal quality metric for the received signal based at least in part on the directional antenna characteristic associated with the beamformed beam orientation corresponding to the received signal.

In some examples, to support generating the communications performance map, the performance mapping component 935 may be configured as or otherwise support a means for determining a blockage or obstruction map, or a physical field of view associated, with a location of the phased array antenna based at least in part on the plurality of signals received by the signal receiver 925 and the plurality of directional antenna characteristics determined by the antenna characteristic manager 930. In some examples, to support generating the communications performance map, the performance mapping component 935 may be configured as or otherwise support a means for determining a boundary of beamformed beam orientations for communications using the phased array antenna (e.g., an effective field of view, an operational field of view) based at least in part on the plurality of signals received by the signal receiver 925 and the plurality of directional antenna characteristics determined by the antenna characteristic manager 930.

In some examples, to support communicating with the target device, the communications manager 940 may be configured as or otherwise support a means for scheduling a handoff to the satellite or target device from another satellite or target device based at least in part on the communications performance map generated by the performance mapping component 935 (e.g., comparing or evaluating a position or trajectory of one or more satellites or other target devices to a boundary or other communications characteristic of the generated communications performance map).

In some examples, the performance mapping component 935 may be configured as or otherwise support a means for determining to perform a beam scanning or beam sweep operation based at least in part on a periodic interval or an event trigger (e.g., a determination to perform an initial performance mapping, a determination to update a performance mapping, a determination of a change of physical antenna orientation, a change of attenuation environment). In some examples, the signal receiver 925 may be configured as or otherwise support a means for receiving the plurality of signals based at least in part on the performance mapping component 935 determining to perform the beam scanning operation.

In some examples, the signal transmitter 960 may be configured as or otherwise support a means for transmitting a second plurality of signals using the phased array antenna (e.g., using a same set of feed elements as the signal receiver 925, using a different set of feed elements than the signal receiver 925). In some examples, the signal receiver 925 receiving the plurality of signals may include receiving reflections of the second plurality of signals transmitted by the signal transmitter 960.

In some examples, to support receiving the plurality of signals, the signal receiver 925 may be configured as or otherwise support a means for receiving ambient signals that are not associated with a transmitting device (e.g., ambient emissions, environmental emissions, temperature-based background emissions). In some examples, to support receiving the ambient signals, the signal receiver 925 may be configured as or otherwise support a means for receiving the ambient signals over a frequency or frequency range that is not used for communicating with the satellite or other target device.

In some examples, the performance mapping component 935 may be configured as or otherwise support a means for transmitting the communications performance map generated by the performance mapping component 935 to a network scheduling entity (e.g., a network device 141, an access node terminal 130, via a satellite communications link, via a terrestrial communication link, via the signal transmitter 960). In some examples, the communications manager 940 may be configured as or otherwise support a means for receiving, from the network scheduling entity (e.g., via a satellite communications link, via a terrestrial communication link, via the signal receiver 925), an instruction to communicate with the satellite or other target device based at least in part on (e.g., in response to the transmitting, determined in accordance with) the communications performance map generated by the performance mapping component 935.

In some examples, the plurality of signals may be received by the signal receiver 925 with a first physical orientation of the phased array antenna, and the signal receiver 925 may be configured as or otherwise support a means for receiving a second plurality of signals at or via the phased array antenna according to a second plurality of beamformed beam orientations of the phased array antenna, and the second plurality of signals may be received by the signal receiver 925 with a second physical orientation of the phased array antenna. In some examples, the antenna characteristic manager 930 may be configured as or otherwise support a means for determining a second plurality of directional antenna characteristics associated with the second plurality of beamformed beam orientations. In some examples, the performance mapping component 935 may be configured as or otherwise support a means for generating the communications performance map based at least in part on the second plurality of signals received by the signal receiver 925 and the second plurality of directional antenna characteristics determined by the performance mapping component 935.

In some examples, to support generating the communications performance map, the performance mapping component 935 may be configured as or otherwise support a means for generating a first performance map in a global coordinate system (e.g., a global reference frame 260, a base reference frame 270) based at least in part on the plurality of signals received by the signal receiver 925, the plurality of directional antenna characteristics determined by the antenna characteristic manager 930, and a first transformation from an antenna coordinate system in the first physical orientation to the global coordinate system. In some examples, to support generating the communications performance map, the performance mapping component 935 may be configured as or otherwise support a means for generating a second performance map in the global coordinate system based at least in part on the second plurality of signals received by the signal receiver 925, the second plurality of directional antenna characteristics determined by the antenna characteristic manager 930, and a second transformation from the antenna coordinate system in the second physical orientation to the global coordinate system. In some examples, to support generating the communications performance map, the performance mapping component 935 may be configured as or otherwise support a means for generating the communications performance map based at least in part on the first performance map and the second performance map.

Additionally or alternatively, the communication system 920 may support one or more techniques for phased array terminal antenna installation in accordance with examples as disclosed herein. For example, the signal receiver 925 may be configured as or otherwise support a means for receiving a plurality of signals at or via a phased array antenna according to a plurality of beamformed beam orientations of the phased array antenna. In some examples, the antenna characteristic manager 930 may be configured as or otherwise support a means for determining a plurality of directional antenna characteristics associated with the plurality of beamformed beam orientations. In some examples, the performance mapping component 935 may be configured as or otherwise support a means for generating a communications performance map based at least in part on the plurality of signals received by the signal receiver 925 and the plurality of directional antenna characteristics determined by the antenna characteristic manager 930. The antenna positioner 945 may be configured as or otherwise support a means for positioning the phased array antenna in a physical orientation that is determined based at least in part on the communications performance map generated by the performance mapping component 935.

In some examples, the repositioning indicator 965 may be configured as or otherwise support a means for generating, based at least in part on the communications performance map generated by the performance mapping component 935, an indication for a user to reposition the phased array antenna from a first physical orientation associated with the plurality of signals received by the signal receiver 925 to a second physical orientation (e.g., a repositioning message, a repositioning alert, a repositioning alarm, an indication of a target or desired physical orientation or a target change of physical orientation).

In some examples, to support positioning the phased array antenna, the positioning actuator 970 may be configured as or otherwise support a means for commanding an actuator (e.g., of the communication system 920) coupled with the phased array antenna (e.g., between a feed array assembly and a base assembly) to reposition the phased array antenna from a first physical orientation associated with the plurality of signals received by the signal receiver 925 to a second physical orientation.

In some examples, the antenna positioner 945 may be configured as or otherwise support a means for determining, at a satellite terminal in communication with the phased array antenna and based at least in part on the communications performance map generated by the performance mapping component 935, the physical orientation of the phased array antenna for the positioning.

In some examples, the performance mapping component 935 may be configured as or otherwise support a means for determining the physical orientation of the phased array antenna for the positioning based at least in part on the communications performance map generated by the performance mapping component 935 and a probability distribution of satellite or other target device locations.

In some examples, to support generating the communications performance map, the performance mapping component 935 may be configured as or otherwise support a means for generating a blockage map, an obstruction map, or a boundary of beamformed beam orientations for communications using the phased array antenna based at least in part on the plurality of signals received by the signal receiver 925 and the plurality of directional antenna characteristics determined by the antenna characteristic manager 930.

In some examples, to support positioning the phased array antenna, the antenna positioner 945 may be configured as or otherwise support a means for aligning a physical boresight of the phased array antenna with an unobstructed portion of a blockage map or obstruction map. In some examples, to support positioning the phased array antenna, the antenna positioner 945 may be configured as or otherwise support a means for aligning a scan volume (e.g., an operational range of beamforming directions) of the phased array antenna relative to an unobstructed field of view of the blockage map or obstruction map.

**FIG. 10** shows a flowchart illustrating a method 1000 that supports communication performance mapping for phased array antennas in accordance with aspects of the present disclosure. The operations of the method 1000 may be implemented by a communication system or its components as described herein (e.g., a user terminal 150, an access node terminal 130, or a combination thereof). For example, the operations of the method 1000 may be performed by a communication system 920 as described with reference to FIG. 9. In some examples, a communication system may execute a set of instructions to control the functional elements of the communication system to perform the described functions. Additionally or alternatively, the communication system may perform aspects of the described functions using special-purpose hardware.

At 1005, the method may include receiving a plurality of signals at or via a phased array antenna according to a plurality of beamformed beam orientations of the phased array antenna. The operations of 1005 may be performed in accordance with examples as disclosed herein. In some examples, aspects of the operations of 1005 may be performed by a signal receiver 925 as described with reference to FIG. 9.

At 1010, the method may include determining a plurality of directional antenna characteristics associated with the plurality of beamformed beam orientations. The operations of 1010 may be performed in accordance with examples as disclosed herein. In some examples, aspects of the operations of 1010 may be performed by an antenna characteristic manager 930 as described with reference to FIG. 9.

At 1015, the method may include generating a communications performance map based at least in part on the received plurality of signals and the determined plurality of directional antenna characteristics. The operations of 1015 may be performed in accordance with examples as disclosed herein. In some examples, aspects of the operations of 1015 may be performed by a performance mapping component 935 as described with reference to FIG. 9.

At 1020, the method may include communicating with a target device (e.g., a satellite) based at least in part on the generated communications performance map. The operations of 1020 may be performed in accordance with examples as disclosed herein. In some examples, aspects of the operations of 1020 may be performed by a communications manager 940 as described with reference to FIG. 9.

In some examples, an apparatus as described herein (e.g., a user terminal 150) may perform a method or methods, such as the method 1000. The apparatus may include, features, circuitry, logic, means, or instructions (e.g., a non-transitory computer-readable medium storing instructions executable by a processor) for receiving a plurality of signals at or via a phased array antenna according to a plurality of beamformed beam orientations of the phased array antenna, determining a plurality of directional antenna characteristics associated with the plurality of beamformed beam orientations, generating a communications performance map based at least in part on the received plurality of signals and the determined plurality of directional antenna characteristics, and communicating with a target device based at least in part on the generated communications performance map.

In some examples of the method 1000 and the apparatus described herein, determining the plurality of directional antenna characteristics may include operations, features, circuitry, logic, means, or instructions for determining, for each beamformed beam orientation of the plurality, an antenna gain, an antenna noise metric, a beamwidth, or any combination thereof associated with electronic beamforming along the beamformed beam orientation.

In some examples of the method 1000 and the apparatus described herein, generating the communications performance map may include operations, features, circuitry, logic, means, or instructions for determining, for each received signal of the plurality, a respective signal quality metric for the received signal and scaling, for each received signal of the plurality, the respective signal quality metric for the received signal based at least in part on the directional antenna characteristic associated with the beamformed beam orientation corresponding to the received signal.

In some examples of the method 1000 and the apparatus described herein, generating the communications performance map may include operations, features, circuitry, logic, means, or instructions for determining a blockage map associated with a location of the phased array antenna based at least in part on the received plurality of signals and the determined plurality of directional antenna characteristics. In some examples of the method 1000 and the apparatus described herein, generating the communications performance map may include operations, features, circuitry, logic, means, or instructions for determining a boundary of beamformed beam orientations for communications using the phased array antenna based at least in part on the received plurality of signals and the determined plurality of directional antenna characteristics.

In some examples of the method 1000 and the apparatus described herein, communicating with the target device may include operations, features, circuitry, logic, means, or instructions for scheduling a handoff to the target device from another target device based at least in part on the generated communications performance map.

Some examples of the method 1000 and the apparatus described herein may further include operations, features, means, or instructions for determining to perform a beam scanning operation based at least in part on a periodic interval or an event trigger and receiving the plurality of signals based at least in part on determining to perform the beam scanning operation.

Some examples of the method 1000 and the apparatus described herein may further include operations, features, means, or instructions for transmitting a second plurality of signals using the phased array antenna, and receiving the plurality of signals may include operations, features, means, or instructions for receiving reflections of the transmitted second plurality of signals.

In some examples of the method 1000 and the apparatus described herein, receiving the plurality of signals may include operations, features, circuitry, logic, means, or instructions for receiving ambient signals not associated with a transmitting device. In some examples of the method 1000 and the apparatus described herein, receiving the ambient signals may include operations, features, circuitry, logic, means, or instructions for receiving the ambient signals over a frequency not used for the communicating with the target device.

Some examples of the method 1000 and the apparatus described herein may further include operations, features, means, or instructions for transmitting the generated communications performance map to a network scheduling entity and receiving, from the network scheduling entity, an instruction to communicate with the target device based at least in part on transmitting the generated communications performance map.

In some examples of the method 1000 and the apparatus described herein, the plurality of signals may be received with a first physical orientation of the phased array antenna. Some examples of the method 1000 and the apparatus described herein may further include operations, features, circuitry, logic, means, or instructions for receiving a second plurality of signals at the phased array antenna according to a second plurality of beamformed beam orientations of the phased array antenna, the second plurality of signals being received with a second physical orientation of the phased array antenna, determining a second plurality of directional antenna characteristics associated with the second plurality of beamformed beam orientations, and generating the communications performance map based at least in part on the received second plurality of signals and the determined second plurality of directional antenna characteristics.

In some examples of the method 1000 and the apparatus described herein, generating the communications performance map may include operations, features, circuitry, logic, means, or instructions for generating a first performance map in a global coordinate system based at least in part on the received plurality of signals, the determined plurality of directional antenna characteristics, and a first transformation from an antenna coordinate system in the first physical orientation to the global coordinate system, generating a second performance map in the global coordinate system based at least in part on the received second plurality of signals, the determined second plurality of directional antenna characteristics, and a second transformation from the antenna coordinate system in the second physical orientation to the global coordinate system, and generating the communications performance map based at least in part on the first performance map and the second performance map.

**FIG. 11** shows a flowchart illustrating a method 1100 that supports techniques for phased array terminal antenna installation in accordance with examples as disclosed herein. The operations of the method 1100 may be implemented by a communication system or its components as described herein (e.g., a user terminal 150, an access node terminal 130, or a combination thereof). For example, the operations of the method 1100 may be performed by a communication system 920 as described with reference to FIG. 9. In some examples, a satellite communication system may execute a set of instructions to control the functional elements of the satellite communication system to perform the described functions. Additionally or alternatively, the satellite communication system may perform aspects of the described functions using special-purpose hardware.

At 1105, the method may include receiving a plurality of signals at or via a phased array antenna according to a plurality of beamformed beam orientations of the phased array antenna. The operations of 1105 may be performed in accordance with examples as disclosed herein. In some examples, aspects of the operations of 1105 may be performed by a signal receiver 925 as described with reference to FIG. 9.

At 1110, the method may include determining a plurality of directional antenna characteristics associated with the plurality of beamformed beam orientations. The operations of 1110 may be performed in accordance with examples as disclosed herein. In some examples, aspects of the operations of 1110 may be performed by an antenna characteristic manager 930 as described with reference to FIG. 9.

At 1115, the method may include generating a communications performance map based at least in part on the received plurality of signals and the determined plurality of directional antenna characteristics. The operations of 1115 may be performed in accordance with examples as disclosed herein. In some examples, aspects of the operations of 1115 may be performed by a performance mapping component 935 as described with reference to FIG. 9.

At 1120, the method may include positioning the phased array antenna in a physical orientation that is determined based at least in part on the generated communications performance map. The operations of 1120 may be performed in accordance with examples as disclosed herein. In some examples, aspects of the operations of 1120 may be performed by an antenna positioner 945 as described with reference to FIG. 9.

In some examples, an apparatus as described herein may perform a method or methods, such as the method 1100. The apparatus may include, features, circuitry, logic, means, or instructions (e.g., a non-transitory computer-readable medium storing instructions executable by a processor) for receiving a plurality of signals at or via a phased array antenna according to a plurality of beamformed beam orientations of the phased array antenna, determining a plurality of directional antenna characteristics associated with the plurality of beamformed beam orientations, generating a communications performance map based at least in part on the received plurality of signals and the determined plurality of directional antenna characteristics, and positioning the phased array antenna in a physical orientation that is determined based at least in part on the generated communications performance map.

Some examples of the method 1100 and the apparatus described herein may further include operations, features, means, or instructions for, generating, based at least in part on generating the communications performance map, an indication for a user to reposition the phased array antenna from a first physical orientation associated with the received plurality of signals to a second physical orientation.

In some examples of the method 1100 and the apparatus described herein, positioning the phased array antenna may include operations, features, circuitry, logic, means, or instructions for commanding an actuator coupled with the phased array antenna to reposition the phased array antenna from a first physical orientation associated with the received plurality of signals to a second physical orientation.

Some examples of the method 1100 and the apparatus described herein may further include operations, features, means, or instructions for determining, at a satellite terminal in communication with the phased array antenna and based at least in part on the generated communications performance map, the physical orientation of the phased array antenna for the positioning.

Some examples of the method 1100 and the apparatus described herein may further include operations, features, means, or instructions for determining the physical orientation of the phased array antenna for the positioning based at least in part on the generated communications performance map and a probability distribution locations of one or more target devices (e.g., a target satellite).

In some examples of the method 1100 and the apparatus described herein, generating the communications performance map may include operations, features, circuitry, logic, means, or instructions for generating a blockage map based at least in part on the received plurality of signals and the determined plurality of directional antenna characteristics. In some examples of the method 1100 and the apparatus described herein, positioning the phased array antenna may include operations, features, circuitry, logic, means, or instructions for aligning a physical boresight of the phased array antenna with an unobstructed portion of the blockage map.

In some examples of the method 1100 and the apparatus described herein, positioning the phased array antenna may include operations, features, circuitry, logic, means, or instructions for aligning a scan volume of the phased array antenna relative to an unobstructed field of view of the blockage map.

It should be noted that the methods described above describe possible implementations, and that the operations and the steps may be rearranged or otherwise modified and that other implementations are possible. Further, portions from two or more of the methods may be combined.

An apparatus is described. The apparatus may include a phased array antenna and a controller (e.g., coupled with the phased array antenna). The controller may be configured to receive a plurality of signals using the phased array antenna according to a plurality of beamformed beam orientations of the phased array antenna, determine a plurality of directional antenna characteristics associated with the plurality of beamformed beam orientations, generate a communications performance map based at least in part on the received plurality of signals and the determined plurality of directional antenna characteristics, and communicate with a target device (e.g., a satellite) using the phased array antenna based at least in part on the generated communications performance map.

In some examples of the apparatus, to determine the plurality of directional antenna characteristics, the controller may be configured to determine, for each beamformed beam orientation of the plurality, an antenna gain, or an antenna noise metric, or a beamwidth, or a combination thereof associated with electronic beamforming along the beamformed beam orientation.

In some examples of the apparatus, to generate the communications performance map, the controller may be configured to determine, for each received signal of the plurality, a respective signal quality metric for the received signal, and scale, for each received signal of the plurality, the respective signal quality metric for the received signal based at least in part on the directional antenna characteristic associated with the beamformed beam orientation corresponding to the received signal.

In some examples of the apparatus, to generate the communications performance map, the controller may be configured to determine a blockage map associated with a location of the phased array antenna based at least in part on the received plurality of signals and the determined plurality of directional antenna characteristics. In some examples of the apparatus, to generate the communications performance map, the controller may be configured to determine a boundary of beamformed beam orientations for communications using the phased array antenna based at least in part on the received plurality of signals and the determined plurality of directional antenna characteristics.

In some examples of the apparatus, to communicate with the target device, the controller may be configured to schedule a handoff to the target device from another target device based at least in part on the generated communications performance map.

In some examples of the apparatus, the controller may be further configured to determine to perform a beam scanning operation based at least in part on a periodic interval or an event trigger and receive the plurality of signals based at least in part on determining to perform the beam scanning operation.

In some examples of the apparatus, the controller may be further configured to transmit a second plurality of signals using the phased array antenna and, to receive the plurality of signals, the controller may be configured to receive reflections of the transmitted second plurality of signals.

In some examples of the apparatus, to receive the plurality of signals, the controller may be configured to receive ambient signals not associated with a transmitting device. In some examples of the apparatus, to receive the ambient signals, the controller may be configured to receive the ambient signals over a frequency not used for the communicating with the target device.

In some examples of the apparatus, the controller may be further configured to transmit the generated communications performance map to a network scheduling entity, and receive, from the network scheduling entity, an instruction to communicate with the target device based at least in part on transmitting the generated communications performance map.

In some examples of the apparatus, the plurality of signals may be received with a first physical orientation of the phased array antenna, and the controller may be further configured to receive a second plurality of signals at the phased array antenna according to a second plurality of beamformed beam orientations of the phased array antenna, the second plurality of signals being received with a second physical orientation of the phased array antenna, determine a second plurality of directional antenna characteristics associated with the second plurality of beamformed beam orientations, and generate the communications performance map based at least in part on the received second plurality of signals and the determined second plurality of directional antenna characteristics.

In some examples of the apparatus, to generate the communications performance map, the controller may be configured to generate a first performance map in a global coordinate system based at least in part on the received plurality of signals, the determined plurality of directional antenna characteristics, and a first transformation from an antenna coordinate system in the first physical orientation to the global coordinate system, generate a second performance map in the global coordinate system based at least in part on the received second plurality of signals, the determined second plurality of directional antenna characteristics, and a second transformation from the antenna coordinate system in the second physical orientation to the global coordinate system, and generate the communications performance map based at least in part on the first performance map and the second performance map.

Another apparatus is described. The apparatus may include a phased array antenna and a controller (e.g., coupled with the phased array antenna). The controller may be configured to receive a plurality of signals at the phased array antenna according to a plurality of beamformed beam orientations of the phased array antenna, determine a plurality of directional antenna characteristics associated with the plurality of beamformed beam orientations, generate a communications performance map based at least in part on the received plurality of signals and the determined plurality of directional antenna characteristics, and determine a physical orientation for the phased array antenna based at least in part on the generated communications performance map.

Some examples of the apparatus may further include a positioning system operable to position the phased array antenna based at least in part on the determined physical orientation. In some examples of the apparatus, the controller may be configured to command an actuator of the positioning system to align the phased array antenna with the determined physical orientation.

In some examples of the apparatus, the controller may be configured to generate, based at least in part on generating the communications performance map, an indication for a user to reposition the phased array antenna from a first physical orientation associated with the received plurality of signals to a second physical orientation.

In some examples of the apparatus, the controller may be configured to determine the physical orientation for the phased array antenna at least in part on the generated communications performance map and a probability distribution of locations of one or more target devices (e.g., a target satellite).

In some examples of the apparatus, to generate the communications performance map, the controller may be configured to generate a blockage map based at least in part on the received plurality of signals and the determined plurality of directional antenna characteristics. In some examples of the apparatus, to position the phased array antenna, the controller may be configured to align a physical boresight of the phased array antenna with an unobstructed portion of the blockage map. In some examples of the apparatus, to position the phased array antenna, the controller may be configured to align a scan volume of the phased array antenna relative to an unobstructed field of view of the blockage map.

The detailed description set forth above in connection with the appended drawings describes examples and does not represent the only examples that may be implemented or that are within the scope of the claims. The term "example," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and modules described in connection with the disclosure herein may be implemented or performed with a general purpose processor, a DSP, an ASIC, an FPGA, or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a digital signal processor (DSP) and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer readable medium. Other examples and implementations are within the scope of the disclosure and appended claims. For example, due to the nature of software, functions described herein can be implemented using software executed by a processor, hardware, firmware, hardwiring, or combinations of any of these. Features implementing functions may also be physically located at various positions, including being distributed such that portions of functions are implemented at different physical locations.

Computer readable media includes both non transitory computer storage media and communication media including any medium that facilitates transfer of a computer program from one place to another. A non-transitory storage medium may be any available medium that can be accessed by a general purpose or special purpose computer. By way of example, and not limitation, non-transitory computer readable media may include random access memory (RAM), read-only memory (ROM), electrically erasable programmable read-only memory (EEPROM), flash memory, compact disk read-only memory (CDROM) or other optical disk storage, magnetic disk storage or other magnetic storage devices, or any other non-transitory medium that can be used to carry or store desired program code means in the form of instructions or data structures and that can be accessed by a general purpose or special purpose computer, or a general purpose or special purpose processor. Also, any connection is properly termed a computer readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include CD, laser disc, optical disc, digital versatile disc (DVD), floppy disk and Blu ray disc where disks usually reproduce data magnetically, while discs reproduce data optically with lasers. Combinations of the above are also included within the scope of computer readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an exemplary step that is described as "based on condition A" may be based on both a condition A and a condition B without departing from the scope of the present disclosure. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "exemplary" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, well known structures and devices are shown in block diagram form in order to avoid obscuring the concepts of the described examples.

The description herein is provided to enable a person skilled in the art to make or use the disclosure. Various modifications to the disclosure will be apparent to those skilled in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. An apparatus for communications in a satellite communication system (100), the apparatus comprising:
a phased array antenna (155); and
a controller (158) coupled with the phased array antenna (155) and configured to:
receive a plurality of signals (315, 335) using the phased array antenna (155) according to a plurality of beamformed beam orientations (255) of the phased array antenna (155);
determine a plurality of directional antenna characteristics (410) associated with the plurality of beamformed beam orientations (255);
generate a communications performance map (620) based at least in part on the received plurality of signals (315, 335) and the determined plurality of directional antenna characteristics (410); and
communicate with a satellite (120) using the phased array antenna (155) based at least in part on the generated communications performance map (620).

2. The apparatus of claim 1, wherein, to determine the plurality of directional antenna characteristics (410), the controller (158) is configured to:
determine, for each beamformed beam orientation (255) of the plurality, an antenna gain associated with electronic beamforming along the beamformed beam orientation (255).

3. The apparatus of claim 1 or 2, wherein, to determine the plurality of directional antenna characteristics (410), the controller (158) is configured to:
determine, for each beamformed beam orientation (255) of the plurality, an antenna noise metric associated with electronic beamforming along the beamformed beam orientation (255).

4. The apparatus of any one of claims 1 through 3, wherein, to determine the plurality of directional antenna characteristics (410), the controller (158) is configured to:
determine, for each beamformed beam orientation (255) of the plurality, a beamwidth associated with electronic beamforming along the beamformed beam orientation (255).

5. The apparatus of any one of claims 1 through 4, wherein, to generate the communications performance map (620), the controller (158) is configured to:
determine, for each received signal (315, 335) of the plurality, a respective signal quality metric (510) for the received signal (315, 335); and
scale, for each received signal (315, 335) of the plurality, the respective signal quality metric (510) for the received signal based at least in part on the directional antenna characteristic (410) associated with the beamformed beam orientation (255) corresponding to the received signal (315, 335).

6. The apparatus of any one of claim 1 through 5, wherein, to generate the communications performance map (620), the controller (158) is configured to:
determine a blockage map associated with a location of the phased array antenna (155) based at least in part on the received plurality of signals (315, 335) and the determined plurality of directional antenna characteristics (410).

7. The apparatus of any one of claims 1 through 6, wherein, to generate the communications performance map (620), the controller (158) is configured to:
determine a boundary (655) of beamformed beam orientations (255) for communications using the phased array antenna (155) based at least in part on the received plurality of signals (315, 335) and the determined plurality of directional antenna characteristics (410).

8. The apparatus of any one of claims 1 through 7, wherein, to communicate with the satellite (120), the controller (158) is configured to:
schedule a handoff to the satellite (120) from another satellite (120) based at least in part on the generated communications performance map (620).

9. The apparatus of any one of claims 1 through 8, wherein the controller (158) is further configured to:
determine to perform a beam scanning operation based at least in part on a periodic interval or an event trigger; and
receive the plurality of signals (315, 335) based at least in part on determining to perform the beam scanning operation.

10. The apparatus of any one of claims 1 through 9, wherein the controller (158) is further configured to:
transmit a second plurality of signals (365, 385) using the phased array antenna (155),
wherein, to receive the plurality of signals (315, 335), the controller (158) is configured to receive reflections of the transmitted second plurality of signals (365, 385).

11. The apparatus of any one of claims 1 through 10, wherein, to receive the plurality of signals, the controller (158) is configured to:
receive ambient signals not associated with a transmitting device.

12. The apparatus of claim 11, wherein, to receive the ambient signals, the controller (158) is configured to:
receive the ambient signals over a frequency not used for the communicating with the satellite (120).

13. The apparatus of any one of claims 1 through 12, wherein the controller (158) is further configured to:
transmit the generated communications performance map (620) to a network scheduling entity (130, 141); and
receive, from the network scheduling entity (130, 141), an instruction to communicate with the satellite (120) based at least in part on transmitting the generated communications performance map (620).

14. The apparatus of any one of claims 1 through 13, wherein the plurality of signals (315, 335) are received with a first physical orientation (275) of the phased array antenna, and the controller (158) is further configured to:
receive a second plurality of signals (315, 335) at the phased array antenna (155) according to a second plurality of beamformed beam orientations (255) of the phased array antenna (155), wherein the second plurality of signals (315, 335) are received with a second physical orientation (275) of the phased array antenna (155);
determine a second plurality of directional antenna characteristics (410) associated with the second plurality of beamformed beam orientations (255); and
generate the communications performance map (620) based further at least in part on the received second plurality of signals (315, 335) and the determined second plurality of directional antenna characteristics (410).

15. The apparatus of claim 14, wherein, to generate the communications performance map (620), the controller (158) is configured to:
generate a first performance map (620) in a global coordinate system (260, 270) based at least in part on the received plurality of signals (315, 335), the determined plurality of directional antenna characteristics (410), and a first transformation from an antenna coordinate system (280) in the first physical orientation (275) to the global coordinate system (260, 270);
generate a second performance map (620) in the global coordinate system (260, 270) based at least in part on the received second plurality of signals (315, 335), the determined second plurality of directional antenna characteristics (410), and a second transformation from the antenna coordinate system (280) in the second physical orientation (275) to the global coordinate system (260, 270); and
generate the communications performance map (620) based further at least in part on the first performance map (620) and the second performance map (620).

## Patentansprüche

1. Einrichtung zur Kommunikation in einem Satellitenkommunikationssystem (100), wobei die Einrichtung umfasst:
eine Phased-Array-Antenne (155); und
eine Steuerung (158), die mit der Phased-Array-Antenne (155) gekoppelt ist und ausgelegt ist zum:
Empfangen einer Vielzahl von Signalen (315, 335) unter Verwendung der Phased-Array-Antenne (155) gemäß einer Vielzahl von strahlgeformten Strahlorientierungen (255) der Phased-Array-Antenne (155);
Bestimmen einer Vielzahl von direktionalen Antennencharakteristiken (410), die mit der Vielzahl von strahlgeformten Strahlorientierungen (255) assoziiert sind;
Erzeugen einer Kommunikationsleistungskarte (620) zumindest teilweise basierend auf der empfangenen Vielzahl von Signalen (315, 335) und der bestimmten Vielzahl von direktionalen Antennencharakteristiken (410); und
Kommunizieren mit einem Satelliten (120) unter Verwendung der Phased-Array-Antenne (155) zumindest teilweise basierend auf der erzeugten Kommunikationsleistungskarte (620).

2. Einrichtung nach Anspruch 1, wobei die Steuerung (158), zum Bestimmen der Vielzahl von direktionalen Antennencharakteristiken (410), ausgelegt ist zum:
Bestimmen, für jede strahlgeformte Strahlorientierung (255) der Vielzahl, einer Antennenverstärkung, die mit elektronischer Strahlformung entlang der strahlgeformten Strahlorientierung (255) assoziiert ist.

3. Einrichtung nach Anspruch 1 oder 2, wobei die Steuerung (158), zum Bestimmen der Vielzahl von direktionalen Antennencharakteristiken (410), ausgelegt ist zum:
Bestimmen, für jede strahlgeformte Strahlorientierung (255) der Vielzahl, einer Antennenrauschmetrik, die mit elektronischer Strahlformung entlang der strahlgeformten Strahlorientierung (255) assoziiert ist.

4. Einrichtung nach einem der Ansprüche 1 bis 3, wobei die Steuerung (158), zum Bestimmen der Vielzahl von direktionalen Antennencharakteristiken (410), ausgelegt ist zum:
Bestimmen, für jede strahlgeformte Strahlorientierung (255) der Vielzahl, einer Strahlbreite, die mit elektronischer Strahlformung entlang der strahlgeformten Strahlorientierung (255) assoziiert ist.

5. Einrichtung nach einem der Ansprüche 1 bis 4, wobei die Steuerung (158), zum Erzeugen der Kommunikationsleistungskarte (620), ausgelegt ist zum:
Bestimmen, für jedes empfangene Signal (315, 335) der Vielzahl, einer jeweiligen Signalqualitätsmetrik (510) für das empfangene Signal (315, 335); und
Skalieren, für jedes empfangene Signal (315, 335) der Vielzahl, der jeweiligen Signalqualitätsmetrik (510) für das empfangene Signal zumindest teilweise basierend auf der direktionalen Antennencharakteristik (410), die mit der strahlgeformten Strahlorientierung (255) assoziiert ist, die dem empfangenen Signal (315, 335) entspricht.

6. Einrichtung nach einem der Ansprüche 1 bis 5, wobei die Steuerung (158), zum Erzeugen der Kommunikationsleistungskarte (620), ausgelegt ist zum:
Bestimmen einer Blockierungskarte, die mit einem Standort der Phased-Array-Antenne (155) assoziiert ist, zumindest teilweise basierend auf der empfangenen Vielzahl von Signalen (315, 335) und der bestimmten Vielzahl von direktionalen Antennencharakteristiken (410).

7. Einrichtung nach einem der Ansprüche 1 bis 6, wobei die Steuerung (158), zum Erzeugen der Kommunikationsleistungskarte (620), ausgelegt ist zum:
Bestimmen einer Grenze (655) von strahlgeformten Strahlorientierungen (255) für Kommunikationen unter Verwendung der Phased-Array-Antenne (155) zumindest teilweise basierend auf der empfangenen Vielzahl von Signalen (315, 335) und der bestimmten Vielzahl von direktionalen Antennencharakteristiken (410).

8. Einrichtung nach einem der Ansprüche 1 bis 7, wobei die Steuerung (158), zum Kommunizieren mit dem Satelliten (120), ausgelegt ist zum:
Planen einer Übergabe von einem anderen Satelliten (120) an den Satelliten (120) zumindest teilweise basierend auf der erzeugten Kommunikationsleistungskarte (620).

9. Einrichtung nach einem der Ansprüche 1 oder 8, wobei die Steuerung (158) ferner ausgelegt ist zum:
Bestimmen, eine Strahlscanoperation zumindest teilweise basierend auf einem periodischen Intervall oder einem Ereignisauslöser durchzuführen; und
Empfangen der Vielzahl von Signalen (315, 335) zumindest teilweise basierend auf dem Bestimmen, die Strahlscanoperation durchzuführen.

10. Einrichtung nach einem der Ansprüche 1 oder 9, wobei die Steuerung (158) ferner ausgelegt ist zum:
Übertragen einer zweiten Vielzahl von Signalen (365, 385) unter Verwendung der Phased-Array-Antenne (155),
wobei die Steuerung (158), zum Empfangen der Vielzahl von Signalen (315, 335), ausgelegt ist zum Empfangen von Reflexionen der übertragenen zweiten Vielzahl von Signalen (365, 385).

11. Einrichtung nach einem der Ansprüche 1 bis 10, wobei die Steuerung (158), zum Empfangen der Vielzahl von Signalen, ausgelegt ist zum:
Empfangen von Umgebungssignalen, die nicht mit einer übertragenden Vorrichtung assoziiert sind.

12. Einrichtung nach Anspruch 11, wobei die Steuerung (158), zum Empfangen der Umgebungssignale, ausgelegt ist zum:
Empfangen der Umgebungssignale über eine Frequenz, die nicht für die Kommunikation mit dem Satelliten (120) verwendet wird.

13. Einrichtung nach einem der Ansprüche 1 oder 12, wobei die Steuerung (158) ferner ausgelegt ist zum:
Übertragen der erzeugten Kommunikationsleistungskarte (620) an eine Netzwerkplanungsentität (130, 141); und Empfangen, von der Netzwerkplanungsentität (130, 141), einer Anweisung zum Kommunizieren mit dem Satelliten (120) zumindest teilweise basierend auf dem Übertragen der erzeugten Kommunikationsleistungskarte (620).

14. Einrichtung nach einem der Ansprüche 1 bis 13, wobei die Vielzahl von Signalen (315, 335) mit einer ersten physischen Orientierung (275) der Phased-Array-Antenne empfangen werden, und die Steuerung (158) ferner ausgelegt ist zum:
Empfangen einer zweiten Vielzahl von Signalen (315, 335) an der Phased-Array-Antenne (155) gemäß einer zweiten Vielzahl von strahlgeformten Strahlorientierungen (255) der Phased-Array-Antenne (155), wobei die zweite Vielzahl von Signalen (315, 335) mit einer zweiten physischen Orientierung (275) der Phased-Array-Antenne (155) empfangen wird;
Bestimmen einer zweiten Vielzahl von direktionalen Antennencharakteristiken (410), die mit der zweiten Vielzahl von strahlgeformten Strahlorientierungen (255) assoziiert sind; und
Erzeugen der Kommunikationsleistungskarte (620) ferner zumindest teilweise basierend auf der empfangenen zweiten Vielzahl von Signalen (315, 335) und der bestimmten zweiten Vielzahl von direktionalen Antennencharakteristiken (410).

15. Einrichtung nach Anspruch 14, wobei die Steuerung (158), zum Erzeugen der Kommunikationsleistungskarte (620), ausgelegt ist zum:
Erzeugen einer ersten Leistungskarte (620) in einem globalen Koordinatensystem (260, 270) zumindest teilweise basierend auf der empfangenen Vielzahl von Signalen (315, 335), der bestimmten Vielzahl von direktionalen Antennencharakteristiken (410) und einer ersten Transformation von einem Antennenkoordinatensystem (280) in der ersten physischen Orientierung (275) zu dem globalen Koordinatensystem (260, 270) ;
Erzeugen einer zweiten Leistungskarte (620) in dem globalen Koordinatensystem (260, 270) zumindest teilweise basierend auf der empfangenen zweiten Vielzahl von Signalen (315, 335), der bestimmten zweiten Vielzahl von direktionalen Antennencharakteristiken (410) und einer zweiten Transformation von dem Antennenkoordinatensystem (280) in der zweiten physischen Orientierung (275) zu dem globalen Koordinatensystem (260, 270); und
Erzeugen der Kommunikationsleistungskarte (620) ferner zumindest teilweise basierend auf der ersten Leistungskarte (620) und der zweiten Leistungskarte (620).

## Revendications

1. Appareil de communications dans un système (100) de communication par satellites, l'appareil comprenant :
une antenne réseau à commande de phase (155) ; et
un contrôleur (158) couplé à l'antenne réseau à commande de phase (155) et configuré pour :
recevoir une pluralité de signaux (315, 335) à l'aide de l'antenne réseau à commande de phase (155) selon une pluralité d'orientations de faisceaux formés (255) de l'antenne réseau à commande de phase (155) ;
déterminer une pluralité de caractéristiques d'antenne directionnelles (410) associée à la pluralité d'orientations de faisceaux formés (255) ;
générer une carte de performances de communication (620) sur la base au moins en partie de la pluralité de signaux reçus (315, 335) et de la pluralité déterminée de caractéristiques d'antenne directionnelles (410) ; et
communiquer avec un satellite (120) à l'aide de l'antenne réseau à commande de phase (155) sur la base au moins en partie de la carte de performances de communication générée (620).

2. Appareil selon la revendication 1, dans lequel, pour déterminer la pluralité de caractéristiques d'antenne directionnelles (410), le contrôleur (158) est configuré pour :
déterminer, pour chaque orientation de faisceau formé (255) de la pluralité, un gain d'antenne associé à la formation électronique de faisceau le long de l'orientation de faisceau formé (255).

3. Appareil selon la revendication 1 ou 2, dans lequel, pour déterminer la pluralité de caractéristiques d'antenne directionnelles (410), le contrôleur (158) est configuré pour :
déterminer, pour chaque orientation de faisceau formé (255) de la pluralité, une métrique de bruit d'antenne associée à la formation électronique de faisceau le long de l'orientation de faisceau formé (255).

4. Appareil selon l'une quelconque des revendications 1 à 3, dans lequel, pour déterminer la pluralité de caractéristiques d'antenne directionnelles (410), le contrôleur (158) est configuré pour :
déterminer, pour chaque orientation de faisceau formé (255) de la pluralité, une largeur de faisceau associée à la formation électronique de faisceaux le long de l'orientation de faisceau formé (255).

5. Appareil selon l'une quelconque des revendications 1 à 4, dans lequel, pour générer la carte de performances de communication (620), le contrôleur (158) est configuré pour :
déterminer, pour chaque signal reçu (315, 335) de la pluralité, une métrique de qualité de signal respective (510) pour le signal reçu (315, 335) ; et
pour chaque signal reçu (315, 335) de la pluralité, mettre à l'échelle la métrique de qualité de signal respective (510) pour le signal reçu sur la base au moins en partie de la caractéristique d'antenne directionnelle (410) associée à l'orientation de faisceau formé (255) correspondant au signal reçu (315, 335).

6. Appareil selon l'une quelconque des revendications 1 à 5, dans lequel, pour générer la carte de performances de communication (620), le contrôleur (158) est configuré pour :
déterminer une carte de blocage associée à un emplacement de l'antenne réseau à commande de phase (155) sur la base, au moins en partie, de la pluralité de signaux reçus (315, 335) et de la pluralité déterminée de caractéristiques d'antenne directionnelles (410).

7. Appareil selon l'une quelconque des revendications 1 à 6, dans lequel, pour générer la carte de performances de communication (620), le contrôleur (158) est configuré pour :
déterminer une frontière (655) d'orientations de faisceaux formés (255) pour des communications à l'aide de l'antenne réseau à commande de phase (155) sur la base au moins en partie de la pluralité de signaux reçus (315, 335) et de la pluralité déterminée de caractéristiques d'antenne directionnelles (410).

8. Appareil selon l'une quelconque des revendications 1 à 7, dans lequel, pour communiquer avec le satellite (120), le contrôleur (158) est configuré pour :
programmer un transfert vers le satellite (120) à partir d'un autre satellite (120) sur la base au moins en partie de la carte de performances de communication générée (620).

9. Appareil selon l'une quelconque des revendications 1 à 8, dans lequel le contrôleur (158) est en outre configuré pour :
déterminer la réalisation d'une opération de balayage de faisceau sur la base au moins en partie d'un intervalle périodique ou d'un déclenchement d'événement ; et
recevoir la pluralité de signaux (315, 335) sur la base au moins en partie de la détermination de la réalisation de l'opération de balayage de faisceau.

10. Appareil selon l'une quelconque des revendications 1 à 9, dans lequel le contrôleur (158) est en outre configuré pour :
émettre une seconde pluralité de signaux (365, 385) à l'aide de l'antenne réseau à commande de phase (155), où, pour recevoir la pluralité de signaux (315, 335), le contrôleur (158) est configuré pour recevoir des réflexions de la seconde pluralité de signaux émise (365, 385).

11. Appareil selon l'une quelconque des revendications 1 à 10, dans lequel, pour recevoir la pluralité de signaux, le contrôleur (158) est configuré pour :
recevoir des signaux ambiants non associés à un dispositif émetteur.

12. Appareil selon la revendication 11, dans lequel, pour recevoir les signaux ambiants, le contrôleur (158) est configuré pour :
recevoir les signaux ambiants sur une fréquence non utilisée pour la communication avec le satellite (120).

13. Appareil selon l'une quelconque des revendications 1 à 12, dans lequel le contrôleur (158) est en outre configuré pour :
transmettre la carte de performances de communication générée (620) à une entité d'ordonnancement de réseau (130, 141) ; et
recevoir, de l'entité d'ordonnancement de réseau (130, 141), une instruction de communiquer avec le satellite (120) sur la base au moins en partie de la transmission de la carte de performances de communication générée (620).

14. Appareil selon l'une quelconque des revendications 1 à 13, dans lequel la pluralité de signaux (315, 335) sont reçus avec une première orientation physique (275) de l'antenne réseau à commande de phase, et le contrôleur (158) est en outre configuré pour :
recevoir une seconde pluralité de signaux (315, 335) au niveau de l'antenne réseau à commande de phase (155) selon une seconde pluralité d'orientations de faisceaux formés (255) de l'antenne réseau à commande de phase (155), la seconde pluralité de signaux (315, 335) étant reçue avec une seconde orientation physique (275) de l'antenne réseau à commande de phase (155) ;
déterminer une seconde pluralité de caractéristiques d'antenne directionnelles (410) associées à la seconde pluralité d'orientations de faisceaux formés (255) ; et
générer la carte de performances de communication (620) sur la base en outre au moins en partie de la seconde pluralité de signaux reçus (315, 335) et de la seconde pluralité déterminée de caractéristiques d'antenne directionnelles (410).

15. Appareil selon la revendication 14, dans lequel, pour générer la carte de performances de communication (620), le contrôleur (158) est configuré pour :
générer une première carte de performances (620) dans un système de coordonnées global (260, 270) sur la base au moins en partie de la pluralité de signaux reçus (315, 335), de la pluralité déterminée de caractéristiques d'antenne directionnelles (410) et d'une première transformation d'un système de coordonnées d'antenne (280) dans la première orientation physique (275) vers le système de coordonnées global (260, 270) ;
générer une seconde carte de performances (620) dans le système de coordonnées global (260, 270) sur la base au moins en partie de la seconde pluralité de signaux reçus (315, 335), de la seconde pluralité déterminée de caractéristiques d'antenne directionnelles (410) et d'une seconde transformation du système de coordonnées d'antenne (280) dans la seconde orientation physique (275) vers le système de coordonnées global (260, 270) ; et
générer la carte de performances de communication (620) sur la base au moins en partie de la première carte de performances (620) et de seconde carte de performances (620).
